# EUROPEAN PATENT APPLICATION

(11) **EP 4 317 318 A1**
(43) Date of publication of application: **07.02.2024**
(21) Application number: 22779946.7
(22) Date of filing: 11.03.2022
(51) Int. Cl.: C08L 69/00, C08K 5/20, C08K 5/25, C08K 5/37, C08K 5/372, C08K 5/524

(54) **POLYCARBONATE RESIN COMPOSITION**

(30) Priority: 30.03.2021 JP 2021058235; 06.09.2021 JP 2021144709; 07.09.2021 JP 2021145178; 07.09.2021 JP 2021145189; 07.09.2021 JP 2021145175; 07.09.2021 JP 2021145177
(71) Applicant: Asahi Kasei Kabushiki Kaisha, Tokyo 1000006 (JP)
(72) Inventor: IDE, Shota, Tokyo 100-0006 (JP); TODA, Tatsuro, Tokyo 100-0006 (JP); NAKATA, Takuto, Tokyo 100-0006 (JP); YONEDA, Hisanari, Tokyo 100-0006 (JP)
(74) Representative: D Young & Co LLP
(86) International application number: PCT/JP2022/010792
(87) International publication number: WO 2022/209725

(57) **Abstract**

Provided is a polycarbonate resin composition comprising: a polycarbonate resin comprising a constituent unit having an alicyclic hydrocarbon site where a carbonate group is linked to two carbon atoms that constitute a ring and are adjacent to each other; and one or two or more compounds selected from the group consisting of a compound having an amide bond, a sulfur compound, and a phosphite ester compound, wherein weight-average molecular weight Mw of the polycarbonate resin measured by size-exclusion chromatography using polystyrene as a standard sample is 50,000 or larger and 500,000 or smaller.

## Description

### Technical Field

The present invention relates to a polycarbonate resin composition.

### Background Art

Aliphatic polycarbonates have heretofore been known to be useful as medical materials, engineering plastics, and the like because of having excellent characteristics such as impact resistance and lightweight properties and however, have a problem of a low glass transition temperature. Among the aliphatic polycarbonates, alicyclic polycarbonates having an alicyclic structure in the backbone structure thereof exhibit a higher glass transition temperature than that of the other aliphatic polycarbonates and are therefore under active development. For example, a polycyclic alicyclic polycarbonate resin is disclosed which has pentacyclopentadecane dimethanol as a skeleton and is excellent in transparency, heat resistance, and color (see, for example, Patent Document 1). Also, a polycarbonate resin is disclosed which is obtained using not only a petroleum starting material but a biomass-derived starting material and using, as a starting material, isosorbide excellent in balance among transparency, heat resistance, water absorbability, surface hardness, low birefringence, and the like (see, for example, Patent Document 2).

Among such alicyclic polycarbonate resins, poly(1,2-cyclohexene carbonate) having a cyclohexane skeleton is the simplest alicyclic polycarbonate having a saturated 6-membered carbon ring corresponding to a benzene ring. It is widely known that poly(1,2-cyclohexene carbonate) can be synthesized by the copolymerization of cyclohexene oxide and carbon dioxide, the ring-opening polymerization of 1,2-cyclohexene carbonate, or the like (see, for example, Patent Document 3 and Non Patent Document 1). The poly(1,2-cyclohexene carbonate) thus obtained has transparency and a property of being completely decomposed at a predetermined temperature and is thus expected to be exploited in optical materials, pyrolytic materials, and the like.

### List of Prior Art Documents

### Patent Document

Patent Document 1: Japanese Patent No. 4774610
Patent Document 2: Japanese Patent No. 6507495
Patent Document 3: Japanese Patent No. 5403537

### Non Patent Document

Non Patent Document 1: Yonghang Xu, Tao Zhang, Yiluan Zhou, Danmin Zhou, Zixin Shen, Limiao Lin, Polymer Degradation and Stability 168, 2019, 108957

### Summary of Invention

### Problems to be Solved by Invention

As mentioned above, poly(1,2-cyclohexene carbonate) is excellent in transparency and on the other hand, is still susceptible to improvement because pyrolysis during molding processing or the resulting reduction in mechanical strength may occur. However, there is no previous report on sufficiently improving the heat stability of poly(1,2-cyclohexene carbonate) while maintaining its transparency.

The present invention has been made in light of these circumstances. An object of the present invention is to provide a polycarbonate resin composition having excellent heat stability.

### Means for Solving Problems

The present inventors have conducted diligent studies to attain the object and consequently completed the present invention by finding that the heat stability of a polycarbonate resin composition is markedly improved by using one or two or more compounds selected from the group consisting of a compound having an amide bond, a sulfur compound, and a phosphite ester compound.

Specifically, the present invention is as follows.
[1] A polycarbonate resin composition comprising:
   a polycarbonate resin comprising a constituent unit having an alicyclic hydrocarbon site where a carbonate group is linked to two carbon atoms that constitute a ring and are adjacent to each other; and
   one or two or more compounds selected from the group consisting of a compound having an amide bond, a sulfur compound, and a phosphite ester compound, wherein
   weight-average molecular weight Mw of the polycarbonate resin measured by size-exclusion chromatography using polystyrene as a standard sample is 50,000 or larger and 500,000 or smaller.
[2] The polycarbonate resin composition according to [1], wherein the constituent unit having an alicyclic hydrocarbon site is represented by the following formula (1) : 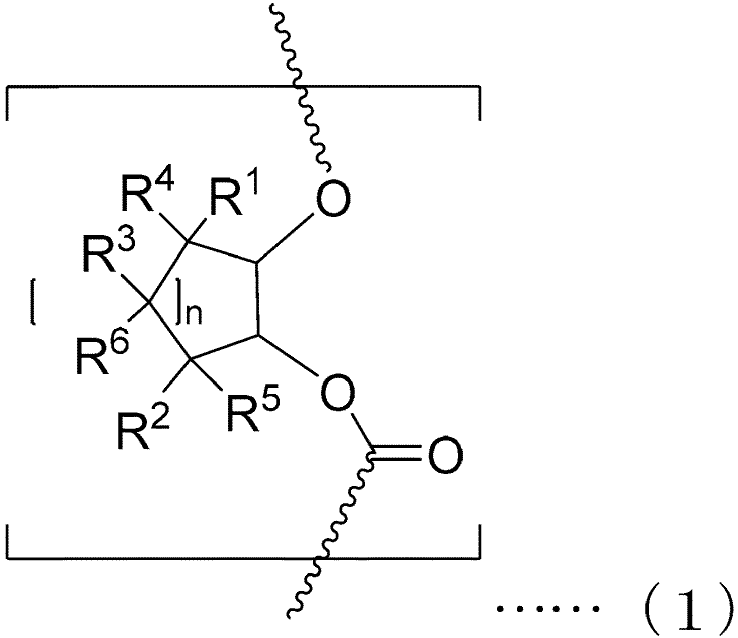 wherein n represents an integer of 1 to 6; and R¹ to R⁶ are each independently a hydrogen atom, a hydroxy group, a phosphoric acid group, an amino group, a vinyl group, an allyl group, an alkoxy group having 1 to 20 carbon atoms, an ester group having 1 to 20 carbon atoms, an acyl group having 1 to 20 carbon atoms, or a linear, branched, or cyclic alkyl group having 1 to 20 carbon atoms, and are optionally bonded to each other via an alkylene group or a carbonate group to form a cyclic structure, wherein the alkylene group is optionally substituted by a hydroxy group, a phosphoric acid group, an amino group, an alkoxy group, or an ester group, a carbonyl group is optionally inserted to the backbone, the alkoxy group, the ester group, the acyl group, and the alkyl group are each optionally substituted by a hydroxy group, a phosphoric acid group, an amino group, an alkoxy group, or an ester group, the aralkyl group, the aryl group, and the heteroaryl group are each optionally substituted by an alkyl group having 1 to 20 carbon atoms.
[3] The polycarbonate resin composition according to [2], wherein in the formula (1), each of R⁴ to R⁶ is a hydrogen atom.
[4] The polycarbonate resin composition according to any of [1] to [3], wherein the polycarbonate resin is poly(1,2-cyclohexene carbonate).
[5] The polycarbonate resin composition according to any of [1] to [4], wherein glass transition temperature Tg of the polycarbonate resin measured with a differential scanning calorimeter is 80°C or higher and 180°C or lower.
[6] The polycarbonate resin composition according to any of [1] to [5], wherein a content of the compound having an amide bond is 500 ppm by mass to 10000 ppm by mass.
[7] The polycarbonate resin composition according to any of [1] to [6], wherein the compound having an amide bond comprises a structure represented by the following formula (2): 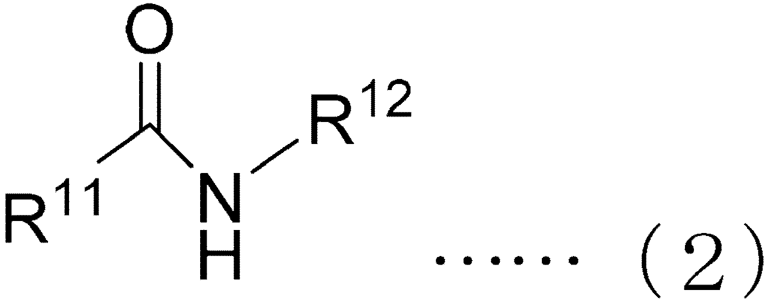 wherein R¹¹ and R¹² are each independently a hydrogen atom, an alkyl group having 1 to 20 carbon atoms, an alkenyl group having 2 to 20 carbon atoms, an alkoxy group having 1 to 20 carbon atoms, a cycloalkyl group having 3 to 20 carbon atoms, an aralkyl group having 7 to 20 carbon atoms, an aryl group having 6 to 20 carbon atoms, or a heteroaryl group having 2 to 20 carbon atoms, wherein the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms.
[8] The polycarbonate resin composition according to any of [1] to [6], wherein the compound having an amide bond comprises a structure represented by the following formula (3): 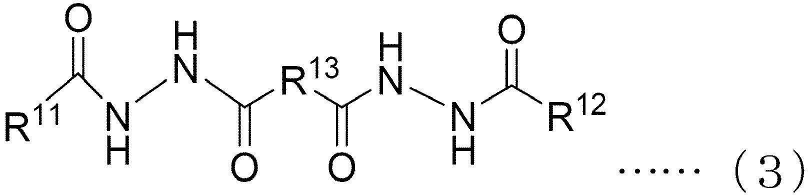 wherein R¹³ is an alkylene group having 1 to 20 carbon atoms, an alkenylene group having 2 to 20 carbon atoms, or an alkoxylene group having 1 to 20 carbon atoms; and R¹¹ and R¹² are each independently a hydrogen atom, an alkyl group having 1 to 20 carbon atoms, an alkenyl group having 2 to 20 carbon atoms, an alkoxy group having 1 to 20 carbon atoms, a cycloalkyl group having 3 to 20 carbon atoms, an aralkyl group having 7 to 20 carbon atoms, an aryl group having 6 to 20 carbon atoms, or a heteroaryl group having 2 to 20 carbon atoms, wherein the alkylene group, the alkenylene group, the alkoxylene group, the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms.
[9] The polycarbonate resin composition according to any of [1] to [6], wherein the compound having an amide bond comprises a structure represented by the following formula (4): 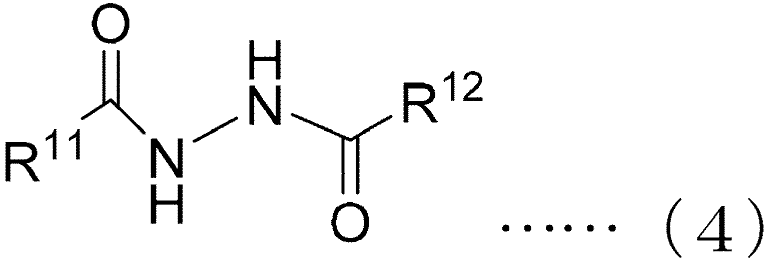 wherein R¹¹ and R¹² are each independently a hydrogen atom, an alkyl group having 1 to 20 carbon atoms, an alkenyl group having 2 to 20 carbon atoms, an alkoxy group having 1 to 20 carbon atoms, a cycloalkyl group having 3 to 20 carbon atoms, an aralkyl group having 7 to 20 carbon atoms, an aryl group having 6 to 20 carbon atoms, or a heteroaryl group having 2 to 20 carbon atoms, wherein the alkylene group, the alkenylene group, the alkoxylene group, the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, the aryl group and the heteroaryl group are each optionally substituted by an alkyl group having 1 to 6 carbon atoms, and the aralkyl group, the aryl group, and the heteroaryl group are each optionally substituted by an alkyl group having 1 to 20 carbon atoms.
[10] The polycarbonate resin composition according to any of [1] to [9], wherein
   a content of the sulfur compound is 500 ppm by mass to 10000 ppm by mass.
[11] The polycarbonate resin composition according to any of [1] to [10], wherein
   the sulfur compound comprises a structure represented by the following formula (2-1): 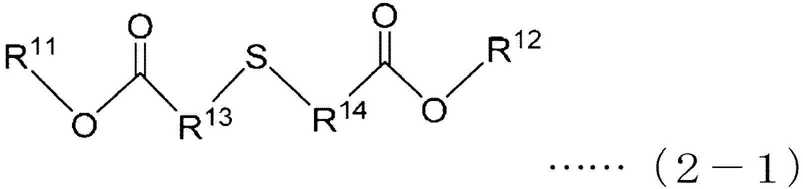 wherein R¹³ and R¹⁴ are each independently an alkylene group having 1 to 20 carbon atoms, an alkenylene group having 2 to 20 carbon atoms, or an alkoxylene group having 1 to 20 carbon atoms; and R¹¹ and R¹² are each independently a hydrogen atom, an alkyl group having 1 to 30 carbon atoms, an alkenyl group having 2 to 30 carbon atoms, a cycloalkyl group having 3 to 30 carbon atoms, an aralkyl group having 7 to 20 carbon atoms, an aryl group having 6 to 30 carbon atoms, or a heteroaryl group having 2 to 30 carbon atoms, wherein the alkylene group, the alkenylene group, the alkoxylene group, the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms.
[12] The polycarbonate resin composition according to any of [1] to [10], wherein
   the sulfur compound comprises a structure represented by the following formula (3-1): 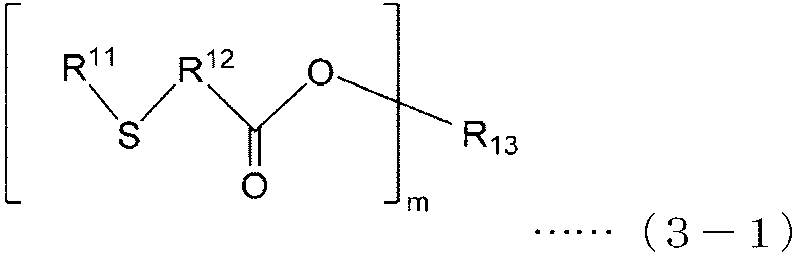 wherein m represents an integer of 1 to 4; each R¹² is independently an alkylene group having 1 to 20 carbon atoms, an alkenylene group having 2 to 20 carbon atoms, or an alkoxylene group having 1 to 20 carbon atoms; each R¹¹ is independently a hydrogen atom, an alkyl group having 1 to 30 carbon atoms, an alkenyl group having 2 to 30 carbon atoms, a cycloalkyl group having 3 to 30 carbon atoms, an aralkyl group having 7 to 20 carbon atoms, an aryl group having 6 to 30 carbon atoms, or a heteroaryl group having 2 to 30 carbon atoms; and R¹³ is an m-valent hydrocarbon group optionally having an alkoxy group, wherein the alkylene group, the alkenylene group, the alkoxylene group, the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms.
[13] The polycarbonate resin composition according to any of [1] to [12], wherein
   the polycarbonate resin composition comprises the compound having an amide bond and the sulfur compound.
[14] The polycarbonate resin composition according to any of [1] to [13], wherein
   contents of the compound having an amide bond and the sulfur compound are each 500 ppm by mass to 10000 ppm by mass.
[15] The polycarbonate resin composition according to any of [1] to [14], wherein
   a content of the phosphite ester compound is 500 ppm by mass to 10000 ppm by mass.
[16] The polycarbonate resin composition according to any of [1] to [15], wherein
   the phosphite ester compound comprises a structure represented by the following formula (2-2): 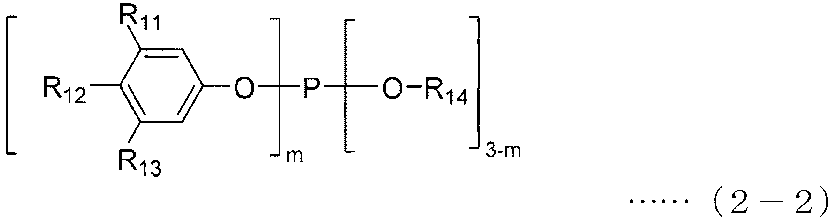 wherein m represents an integer of 0 to 3; and R¹¹ to R¹⁴ are each independently a hydrogen atom, an alkyl group having 1 to 20 carbon atoms, an alkenyl group having 2 to 20 carbon atoms, an alkoxy group having 1 to 20 carbon atoms, a cycloalkyl group having 3 to 20 carbon atoms, an aralkyl group having 7 to 20 carbon atoms, an aryl group having 6 to 20 carbon atoms, or a heteroaryl group having 2 to 20 carbon atoms, wherein the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms.
[17] The polycarbonate resin composition according to any of [1] to [15], wherein
   the phosphite ester compound comprises a structure represented by the following formula (3-2): 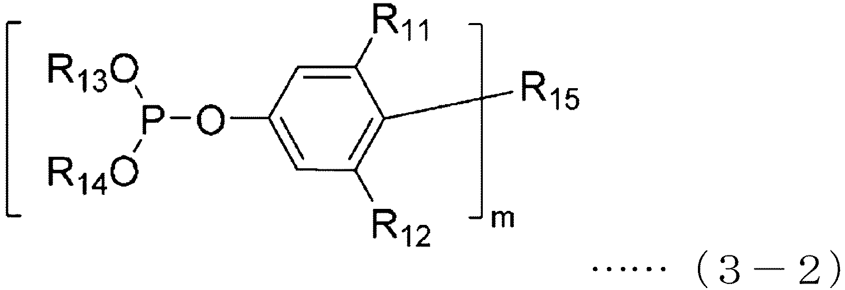 wherein m represents an integer of 1 to 4; R¹¹ and R¹² are each independently a hydrogen atom, an alkyl group having 1 to 20 carbon atoms, an alkenyl group having 2 to 20 carbon atoms, an alkoxy group having 1 to 20 carbon atoms, a cycloalkyl group having 3 to 20 carbon atoms, an aralkyl group having 7 to 20 carbon atoms, an aryl group having 6 to 20 carbon atoms, or a heteroaryl group having 2 to 20 carbon atoms; R¹³ and R¹⁴ are each independently a hydrogen atom, an alkyl group having 1 to 30 carbon atoms, an alkenyl group having 2 to 30 carbon atoms, a cycloalkyl group having 3 to 30 carbon atoms, an aralkyl group having 7 to 20 carbon atoms, an aryl group having 6 to 30 carbon atoms, or a heteroaryl group having 2 to 30 carbon atoms; and R¹⁵ is an m-valent hydrocarbon group, wherein the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms.
[18] The polycarbonate resin composition according to any of [1] to [17], wherein
   the polycarbonate resin composition comprises the compound having an amide bond and the phosphite ester compound.
[19] The polycarbonate resin composition according to any of [1] to [18], wherein
   contents of the compound having an amide bond and the phosphite ester compound are each 500 ppm by mass to 10000 ppm by mass.

### Advantages of Invention

The present invention can provide an alicyclic polycarbonate resin composition having excellent heat stability.

### Mode for Carrying Out Invention

Hereinafter, a mode for carrying out the present invention (hereinafter, simply referred to as the "present embodiment") will be described in detail. The present embodiment given below is an illustration for describing the present invention and does not intend to limit the present invention by the contents given below. The present invention can be carried out through various changes or modifications without departing from the spirit of the present invention.

### (Polycarbonate resin composition)

The polycarbonate resin composition of the present embodiment comprises: a polycarbonate resin comprising a constituent unit having an alicyclic hydrocarbon site where a carbonate group is linked to two carbon atoms that constitute a ring and are adjacent to each other; and one or two or more compounds selected from the group consisting of a compound having an amide bond, a sulfur compound, and a phosphite ester compound, wherein weight-average molecular weight Mw of the polycarbonate resin measured by size-exclusion chromatography using polystyrene as a standard sample is 50,000 or larger and 500,000 or smaller. The polycarbonate resin composition of the present embodiment is excellent in heat stability by having the feature as described above.

Although the pyrolysis mechanism of the polycarbonate resin used in the present embodiment is not clear, the pyrolysis is presumably due to the elimination of a monomer through the ring-closing reaction of a carbonate group at a polymer end. Particularly, the presence of an alicyclic hydrocarbon site where a carbonate group is linked to two adjacent carbon atoms of alicyclic hydrocarbon accelerates the ring-closing reaction. When one or two or more compounds selected from the group consisting of a compound having an amide bond, a sulfur compound, and a phosphite ester compound are added to the polycarbonate resin, hydrogen bond action is presumed to occur between the carbonate group at the polymer end and the added compound, suppressing the ring-closing reaction of the carbonate group.

The mechanism mentioned above is a presumption, and the mechanism is not limited thereto.

### (Polycarbonate resin)

The polycarbonate resin for use in the polycarbonate resin composition of the present embodiment comprises a constituent unit having an alicyclic hydrocarbon site where a carbonate group is linked to two carbon atoms that constitute a ring and are adjacent to each other (hereinafter, also simply referred to as a "constituent unit having an alicyclic hydrocarbon site").

The constituent unit having an alicyclic hydrocarbon site is preferably represented by the following formula (1) : 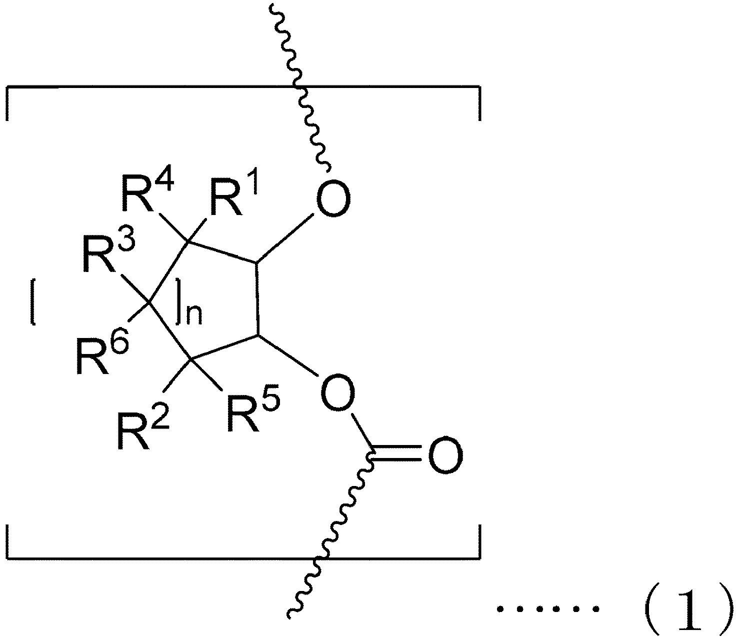 wherein n represents an integer of 1 to 6; and R¹ to R⁶ are each independently a hydrogen atom, a hydroxy group, a phosphoric acid group, an amino group, a vinyl group, an allyl group, an alkoxy group having 1 to 20 carbon atoms (preferably having 1 to 12 carbon atoms, more preferably having 1 to 10 carbon atoms), an ester group having 1 to 20 carbon atoms (preferably having 1 to 12 carbon atoms, more preferably having 1 to 11 carbon atoms), an acyl group having 1 to 20 carbon atoms (preferably having 1 to 12 carbon atoms, more preferably having 1 to 11 carbon atoms), or a linear, branched, or cyclic alkyl group having 1 to 20 carbon atoms (preferably having 1 to 12 carbon atoms, more preferably having 1 to 10 carbon atoms), and are optionally bonded to each other via an alkylene group or a carbonate group to form a cyclic structure, wherein the alkylene group is optionally substituted by a hydroxy group, a phosphoric acid group, an amino group, an alkoxy group, or an ester group, a carbonyl group is optionally inserted to the backbone, the alkoxy group, the ester group, the acyl group, and the alkyl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms.

In the formula (1), when n is 1, the ring structure means cyclopentane; when n is 2, the ring structure means cyclohexane; when n is 3, the ring structure means cycloheptane; when n is 4, the ring structure means cyclooctane; when n is 5, the ring structure means cyclononane; and when n is 6, the ring structure means cyclodecane. In the formula (1), two wavy line portions are binding moieties of repeat units.

In the formula (1), n is preferably an integer of 1 to 4, more preferably an integer of 1 to 3, from the viewpoint of the easy availability of a starting material.

In the formula (1), each of R⁴ to R⁶ may be a hydrogen atom.

The polycarbonate resin used in the present embodiment preferably comprises a constituent unit represented by the following formula (5) having terminal structures represented by A¹ and A²: 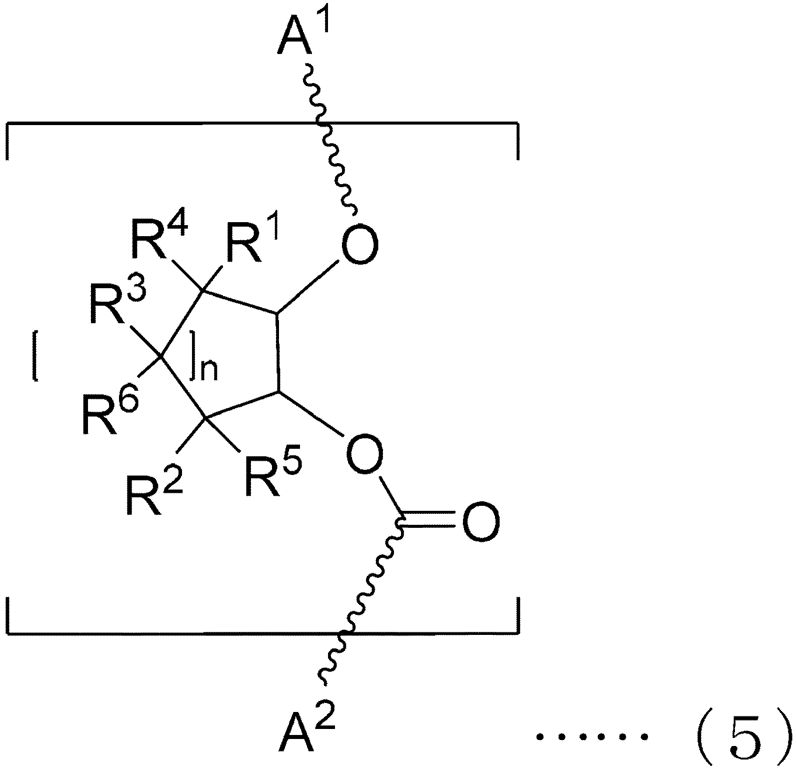 wherein A¹ and A² are each independently a hydrogen atom, a hydroxy group, a phosphoric acid group, an amino group, a vinyl group, an allyl group, a phenyl group, a benzyl group, an alkoxy group having 1 to 10 carbon atoms, a silyl group having 1 to 30 carbon atoms, a silylalkoxy group having 1 to 30 carbon atoms, an ester group having 1 to 11 carbon atoms, an acyl group having 1 to 11 carbon atoms, or a linear, branched, or cyclic alkyl group having 1 to 10 carbon atoms, or A¹ and A² are optionally bonded to each other to form a cyclic structure, i.e., the terminal structures represented by A¹ and A² are optionally absent; and n and R¹ to R⁶ are as defined in the formula (1).

The number of repeats of the constituent unit represented by the formula (5) is, for example, 300 to 3500.

In the formula (5), each of R⁴ to R⁶ may be a hydrogen atom.

The polycarbonate resin used in the present embodiment is preferably poly(1,2-cyclohexene carbonate). The polycarbonate resin composition of the present embodiment tends to be excellent in both heat stability and transparency when the polycarbonate resin is poly(1,2-cyclohexene carbonate).

### (Average molecular weight of polycarbonate resin)

The polycarbonate resin used in the present embodiment has weight-average molecular weight Mw of 50,000 or larger and 500,000 or smaller measured by size-exclusion chromatography using polystyrene as a standard sample. The polycarbonate resin of the present embodiment having Mw that falls within the range described above is easy to process by molding. Such a polycarbonate resin has much better heat resistance, optical characteristics, and mold releasability. From a similar viewpoint, Mw is more preferably 80,000 or larger and 400,000 or smaller, further preferably 100,000 or larger and 300,0000 or smaller.

The number-average molecular weight Mn of the polycarbonate resin used in the present embodiment measured by size-exclusion chromatography using polystyrene as a standard sample is preferably 50,000 or larger and 500,000 or smaller, more preferably 80,000 or larger and 400,000 or smaller, further preferably 100,000 or larger and 300,0000 or smaller.

The weight-average molecular weight and the number-average molecular weight of the polycarbonate resin in size-exclusion chromatography can specifically be measured by a method described in Examples.

In order to control the weight-average molecular weight Mw and the number-average molecular weight Mn of the polycarbonate resin used in the present embodiment to within the range described above, the proportions of a polymerizable monomer, a polymerization initiator, and an additive can be appropriately adjusted, or the polycarbonate resin can be produced by a production method mentioned later. Mw and Mn tend to be able to be increased by decreasing the ratio of the polymerization initiator to the polymerizable monomer. Mw and Mn tend to be able to be increased by stirring using a stirring blade or a flow mixer.

The glass transition temperature Tg of the polycarbonate resin used in the present embodiment, measured with differential scanning calorimeter is preferably 80°C or higher and 180°C or lower, more preferably 90°C or higher and 180°C or lower, further preferably 100°C or higher and 180°C or lower. The polycarbonate resin composition of the present embodiment tends to have much better heat stability when the glass transition temperature Tg of the polycarbonate resin falls within the range described above.

Examples of the method for controlling the glass transition temperature Tg of the polycarbonate resin to within the range described above include, but are not particularly limited to, a method of controlling the weight-average molecular weight and the number-average molecular weight of the polycarbonate resin.

When the polycarbonate resin comprises plural types of constituent units having an alicyclic hydrocarbon site, examples of the molecular sequence of the polycarbonate resin used in the present embodiment include random copolymers, alternate copolymers, and block copolymers. The polycarbonate resin may have two or more types of polymer sequences.

The stereoregularity of the polycarbonate resin used in the present embodiment includes an isotactic structure, a syndiotactic structure, and an atactic structure. An atactic structure which becomes amorphous is preferred from the viewpoint of more improving transparency.

### (Method for producing polycarbonate resin)

Examples of the method for producing the polycarbonate resin used in the present embodiment include, but are not particularly limited to, conventional methods such as the ring-opening polymerization of alicyclic cyclic carbonate represented by the following formula (6), the copolymerization of alicyclic cyclic oxide represented by the following formula (7) with carbon dioxide, and the transesterification method of alicyclic diol represented by the following formula (8) with a carbonate precursor: 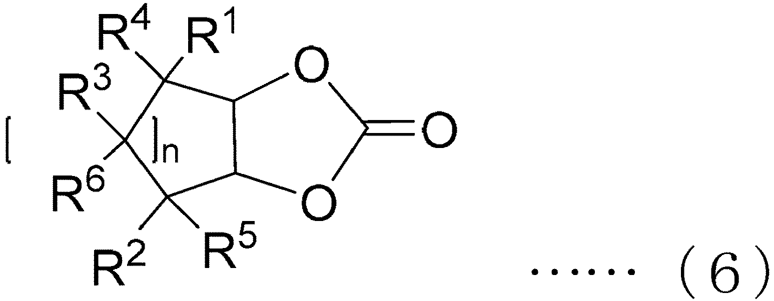 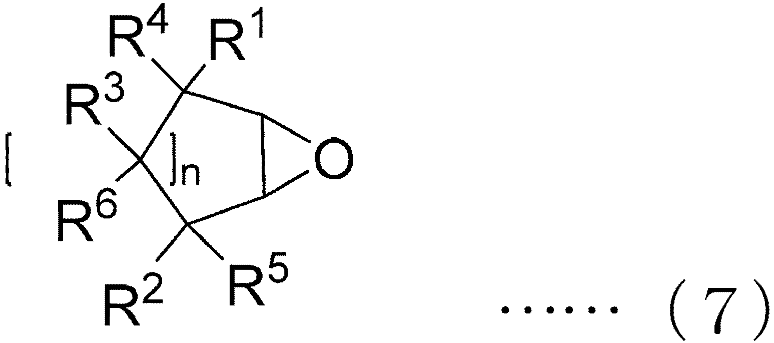 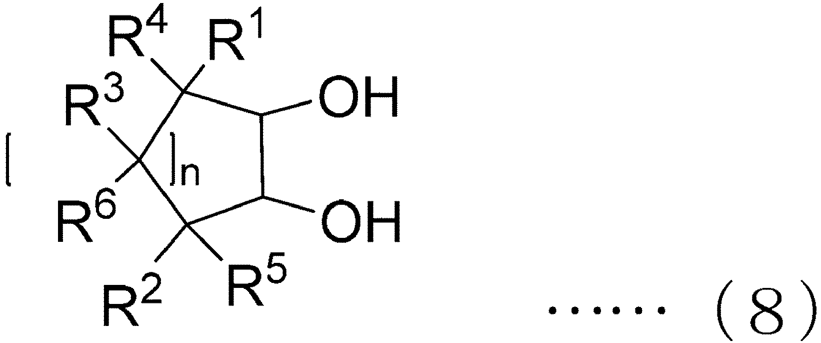 wherein n represents an integer of 1 to 5; and R¹ to R⁶ are each independently a hydrogen atom, a hydroxy group, a phosphoric acid group, an amino group, a vinyl group, an allyl group, an alkoxy group having 1 to 20 carbon atoms (preferably having 1 to 12 carbon atoms, more preferably having 1 to 10 carbon atoms), an ester group having 1 to 20 carbon atoms (preferably having 1 to 12 carbon atoms, more preferably having 1 to 11 carbon atoms), an acyl group having 1 to 20 carbon atoms (preferably having 1 to 12 carbon atoms, more preferably having 1 to 11 carbon atoms), or a linear, branched, or cyclic alkyl group having 1 to 20 carbon atoms (preferably having 1 to 12 carbon atoms, more preferably having 1 to 10 carbon atoms), and are optionally bonded to each other via an alkylene group or a carbonate group to form a cyclic structure, wherein the alkylene group is optionally substituted by a hydroxy group, a phosphoric acid group, an amino group, an alkoxy group, or an ester group, a carbonyl group is optionally inserted to the backbone, and the alkoxy group, the ester group, the acyl group, or the alkyl group are each optionally substituted by a hydroxy group, a phosphoric acid group, an amino group, an alkoxy group, or an ester group.

### (Ring-opening polymerization)

In the method for producing the polycarbonate resin used in the present embodiment, one type of alicyclic cyclic carbonate may be used singly as the cyclic carbonate for use in ring-opening polymerization, or two or more types of arbitrary alicyclic cyclic carbonates differing in R¹ to R⁶ in the formula (6) may be used in combination.

Examples of the initiator for ring-opening polymerizing the alicyclic cyclic carbonate include, but are not particularly limited to, acid catalysts, base catalysts, and enzyme catalysts. Examples of the base catalyst include, but are not particularly limited to, alkali metals, metal alkoxide, organic acid salts of metals, cyclic amine, triamine compounds, and heterocyclic compounds. Among them, an alkali metal or metal alkoxide is preferred.

The method for reacting the alicyclic cyclic carbonate in the presence of the initiator in ring-opening polymerization is not particularly limited, and any method may be used as long as the method is a polymerization method usually used, for example, batch polymerization, semi-batch polymerization, or flow polymerization.

### (CO₂ copolymerization)

In the method for producing the polycarbonate resin used in the present embodiment, one type of alicyclic cyclic oxide may be used singly as the alicyclic cyclic oxide for use in copolymerization with carbon dioxide, or two or more types of arbitrary alicyclic cyclic oxides differing in R¹ to R⁶ in the formula (7) may be used in combination.

Examples of the polymerization catalyst for copolymerizing the alicyclic cyclic oxide with carbon dioxide include, but are not particularly limited to, metal catalysts such as aluminum catalysts and zinc catalysts. Among them, a zinc catalyst is preferred, and an organic zinc catalyst is more preferred, because of the reactivity between the alicyclic cyclic oxide and carbon dioxide.

Examples of the method for reacting the alicyclic cyclic oxide with carbon dioxide in the presence of the polymerization catalyst in CO₂ copolymerization include, but are not particularly limited to, a method of mixing the alicyclic cyclic oxide with the polymerization catalyst in an autoclave, and press-fitting carbon dioxide thereinto for reaction.

### (Transesterification method)

In the method for producing the polycarbonate resin used in the present embodiment, one type of alicyclic cyclic diol may be used singly as the alicyclic cyclic diol for use in the transesterification method, or two or more types of arbitrary alicyclic cyclic diols differing in R¹ to R⁶ in the formula (8) may be used in combination.

The carbonate precursor is not particularly limited, and, for example, carbonate ester or carbonyl halide is used. Specific examples thereof include, but are not particularly limited to, diphenyl carbonate, dimethyl carbonate, and phosgene.

Examples of the polymerization catalyst for the alicyclic cyclic diol include, but are not particularly limited to, alkali metal hydroxide, alkali metal carbonate, and organic amine. Among them, alkali metal hydroxide is preferred.

The method for reacting the alicyclic cyclic diol with the carbonate precursor in the presence of the polymerization catalyst in the transesterification method is not particularly limited, and any method may be used as long as the method is a polymerization method usually used, for example, melt polymerization or solid-phase polymerization.

### (Purification step)

The method for producing the polycarbonate resin used in the present embodiment preferably comprises a purification step. Examples of the purification method include, but are not particularly limited to, devolatilization purification by warming under reduced pressure, and precipitation purification using a precipitating solvent. In the purification step, one type of method may be used singly, or two or more of methods may be used in combination.

### (Devolatilization purification)

In the purification step of the polycarbonate resin used in the present embodiment, devolatilization purification may or may not be used. The devolatilization purification conditions are not particularly limited as long as the polycarbonate resin used in the present embodiment can be purified. The devolatilization temperature is preferably 0 to 300°C, more preferably 0 to 270°C, further preferably 100 to 270°C. The devolatilization pressure is preferably 0 to 80 kPaA, more preferably 0 to 50 kPaA, further preferably 0 to 10 kPaA.

### (Precipitation purification)

In the purification step of the polycarbonate resin used in the present embodiment, precipitation purification may or may not be used. The precipitation purification conditions are not particularly limited as long as the polycarbonate resin used in the present embodiment can be purified. Preferred examples of the precipitating solvent include alcohol solvents such as methanol, ethanol, propanol, butanol, pentanol, hexanol, heptanol, octanol, and decanol.

### (Compound having amide bond)

The polycarbonate resin composition of the present embodiment preferably contains a compound having an amide bond, particularly, from the viewpoint of markedly enhancing heat stability in nitrogen. The compound having an amide bond used in the present embodiment is not particularly limited as long as the compound has an amide bond in the molecule. Examples thereof include fatty acid amide, phenylamide-based stabilizers, and oxalic acid anilide-based stabilizers.

The compound having an amide bond is preferably a compound having a structure represented by the following formula (2), a compound having a structure represented by the following formula (3), or a compound having a structure represented by the following formula (4): 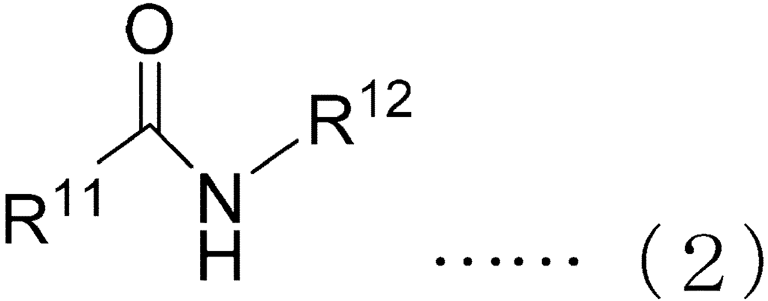 wherein R¹¹ and R¹² are each independently a hydrogen atom, an alkyl group having 1 to 20 carbon atoms, an alkenyl group having 2 to 20 carbon atoms, an alkoxy group having 1 to 20 carbon atoms, a cycloalkyl group having 3 to 20 carbon atoms, an aralkyl group having 7 to 20 carbon atoms, an aryl group having 6 to 20 carbon atoms, or a heteroaryl group having 2 to 20 carbon atoms, wherein the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms. 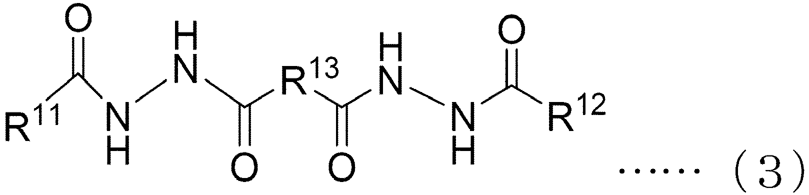 wherein R¹³ is an alkylene group having 1 to 20 carbon atoms, an alkenylene group having 2 to 20 carbon atoms, or an alkoxylene group having 1 to 20 carbon atoms; and R¹¹ and R¹² are each independently a hydrogen atom, an alkyl group having 1 to 20 carbon atoms, an alkenyl group having 2 to 20 carbon atoms, an alkoxy group having 1 to 20 carbon atoms, a cycloalkyl group having 3 to 20 carbon atoms, an aralkyl group having 7 to 20 carbon atoms, an aryl group having 6 to 20 carbon atoms, or a heteroaryl group having 2 to 20 carbon atoms, wherein the alkylene group, the alkenylene group, the alkoxylene group, the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms. 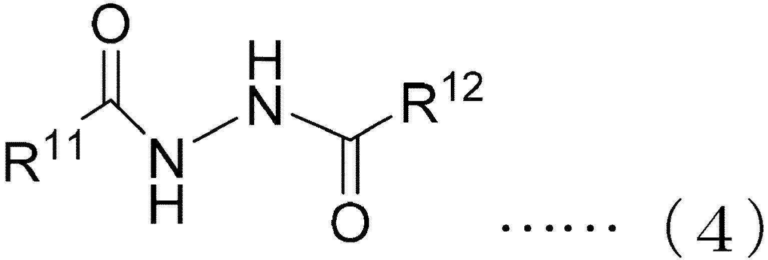 wherein R¹¹ and R¹² are each independently a hydrogen atom, an alkyl group having 1 to 20 carbon atoms, an alkenyl group having 2 to 20 carbon atoms, an alkoxy group having 1 to 20 carbon atoms, a cycloalkyl group having 3 to 20 carbon atoms, an aralkyl group having 7 to 20 carbon atoms, an aryl group having 6 to 20 carbon atoms, or a heteroaryl group having 2 to 20 carbon atoms, wherein the alkylene group, the alkenylene group, the alkoxylene group, the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, the aryl group and the heteroaryl group are each optionally substituted by an alkyl group having 1 to 6 carbon atoms, and the aralkyl group, the aryl group, and the heteroaryl group are each optionally substituted by an alkyl group having 1 to 20 carbon atoms.

Examples of the fatty acid amide include, but are not particularly limited to, N-vinylacetamide, N,N-dimethylacetamide, N-ethylacetamide, N-methylpropionamide, 2-amino-N-methylacetamide, 2-hydroxy-N-methylacetamide, N-hydroxymethylacetamide, 2-chloro-N-methylacetamide, 2-bromo-N-methylacetamide, imidazolidin-4-one hydrochloride, N,N-dimethylprop-2-ynamide, N,N-diethylprop-2-ynamide, 1,2-diacetylhydrazine, 4-oxo-4-[N'-(thiophene-2-carbonyl)-hydrazino]butyric acid, stearic acid amide, oleic acid amide, erucic acid amide, ethylenebis(stearic acid amide), methylenebis(stearic acid amide), and ethylenebis(oleic acid amide).

Examples of the phenylamide-based stabilizer include, but are not particularly limited to, N-(2H-1,2,4-triazol-5-yl)salicylamide, bis[N2-(2-hydroxybenzoyl)hydrazide] dodecanedioate, 2',3'-bis[3-(3,5-di-tert-butyl-4-hydroxyphenyl)propionyl]hydrazine, N,N'-hexamethylenebis[3-(3,5-di-tert-butyl-4-hydroxyphenyl)propanamide], and N,N'-bis-2,2,6,6-tetramethyl-4-piperidinyl-1,3-benzenedicarboxyamide.

Examples of the oxalic acid anilide-based heat stabilizer include, but are not particularly limited to, 2-ethoxy-2'-ethyl oxalic acid bisanilide, N-(2-ethylphenyl)-N'-(2-ethoxyphenyl)oxalic acid diamide, and 2,2,4,4-tetramethyl-7-oxa-3,20-diazadispiro[5.1.11.2]henicosan-21-one.

The compound having an amide bond used in the present embodiment is preferably a phenylamide-based stabilizer, more preferably a compound having a structure represented by the formula (4), further preferably 2',3'-bis[3-(3,5-di-tert-butyl-4-hydroxyphenyl)propionyl]hydrazine, from the viewpoint of more effectively and reliably exerting the advantageous effects of the present invention, particularly, from the viewpoint of markedly enhancing heat stability in nitrogen. One type of these compounds may be used singly, or two or more thereof may be used in combination. The enhancement of heat stability in nitrogen tends to improve, for example, heat stability in a solvent devolatilization process in resin production and a molding process, and product heat stability in a deoxidized atmosphere such as vacuum.

The compound having an amide bond used in the present embodiment is preferably a compound having a structure represented by the formula (2) or a compound having a structure represented by the formula (3), more preferably N-(2H-1,2,4-triazol-5-yl)salicylamide or bis[N2-(2-hydroxybenzoyl)hydrazide] dodecanedioate, from the viewpoint of markedly enhancing heat stability in nitrogen and in air. The enhancement of heat stability in air tends to improve, for example, product heat stability under air.

The content of the compound having an amide bond for use in the polycarbonate resin composition of the present embodiment is preferably 500 ppm by mass to 10000 ppm by mass, more preferably 500 ppm by mass to 5000 ppm by mass, further preferably 1000 ppm by mass to 5000 ppm by mass, based on the total mass of the polycarbonate resin composition from the viewpoint of the amount of the compound added which sufficiently produces the advantageous effects of the present invention, and cost.

### (Sulfur compound)

The polycarbonate resin composition of the present embodiment preferably contains a sulfur compound from the viewpoint of markedly enhancing heat stability in air.

The sulfur compound is not particularly limited as long as the compound has sulfur in the molecule. Examples thereof include methyl mercaptoacetate, ethyl mercaptoacetate, ethyl 2-(methylthio)acetate, cysteinemethyl, methoxycarbonylsulfenyl chloride, methyl 2-ethylsulfanylacetate, methylthiomethyl acetate, 2-mercaptopropionic acid methyl ester, methyl 3-mercaptopropionate, ethyl 3-mercaptopropanoate, ethyl 2-mercaptopropionate, β-mercaptopropionic acid, methoxybutyl-3-mercaptopropionate, stearyl-3-mercaptopropionate, trimethylolpropane-tris(3-mercaptopropionate), methyl methylthioacetate, methyl 2-methylthiopropionate, methyl 3-methylthiopropionate, 2-ethylhexyl-3-mercaptopropionate, n-octyl-3-mercaptopropionate, pentaerythritol-tetrakis(3-mercaptopropionate), tetraethylene glycol-bis(3-mercaptopropionate), dipentaerythritol-hexakis(3-mercaptopropionate), 3,3'-thiodipropionic acid, dithiodipropionic acid, dodecylthiopropionic acid, thiodiglycolic acid, dimethyl 3-thiaadipate, ethyl 2-[(2-methoxy-2-oxoethyl)sulfanyl]acetate, ethyl [(ethoxycarbonyl)thio]acetate, diethyl 2,2'-thiodiacetate, methyl 3-[(2-methoxy-2-oxoethyl)thio]butanoate, dilauryl-3,3'-thiodipropionate, ditridecyl 3,3'-thiobispropionate, dimyristyl-3,3'-thiodipropionate, distearyl-3,3'-thiodipropionate, pentaerythritol-tetrakis(3-laurylthiopropionate), pentaerythritol-tetrakis(3-myristylthiopropionate), pentaerythritol-tetrakis(3-stearylthiopropionate), pentaerythritol tetrakis[3-(dodecylthio)propionate], ethyl 2-[(2-methoxy-2-oxoethyl)sulfanyl]propanoate, thioglycolic acid-ammonium, thioglycolic acid-monoethanolamine, dithiodiglycolic acid-diammonium, 2,5-thiacylenemethyl, and tris[2-t-butyl-4-thio(2'-methyl-4'-hydroxy-5'-t-butyl)phenyl-5-methyl]-phenyl phosphite.

Among them, a compound having a structure represented by the formula (2-1) given below, or a compound having a structure represented by the formula (3-1) given below is preferred, and ditridecyl 3,3'-thiobispropionate or pentaerythritol tetrakis[3-(dodecylthio)propionate] is more preferred, particularly, from the viewpoint of markedly enhancing heat stability in air.

One type of these compounds may be used singly, or two or more thereof may be used in combination. The enhancement of heat stability in air improves, for example, product heat stability under air. 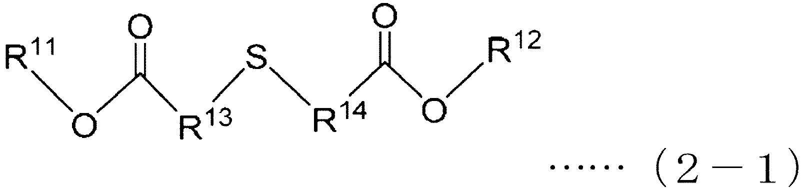 wherein R¹³ and R¹⁴ are each independently an alkylene group having 1 to 20 carbon atoms, an alkenylene group having 2 to 20 carbon atoms, or an alkoxylene group having 1 to 20 carbon atoms; and R¹¹ and R¹² are each independently a hydrogen atom, an alkyl group having 1 to 30 carbon atoms, an alkenyl group having 2 to 30 carbon atoms, a cycloalkyl group having 3 to 30 carbon atoms, an aralkyl group having 7 to 20 carbon atoms, an aryl group having 6 to 30 carbon atoms, or a heteroaryl group having 2 to 30 carbon atoms, wherein the alkylene group, the alkenylene group, the alkoxylene group, the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms. 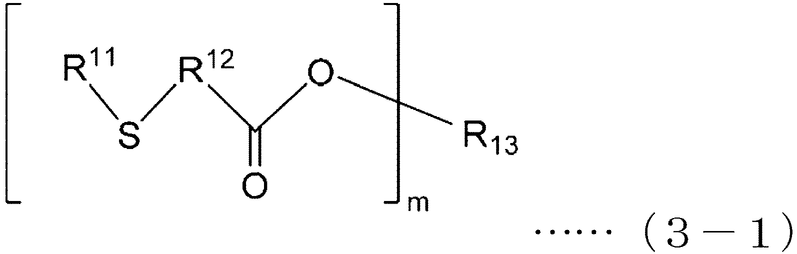 wherein m represents an integer of 1 to 4; each R¹² is independently an alkylene group having 1 to 20 carbon atoms, an alkenylene group having 2 to 20 carbon atoms, or an alkoxylene group having 1 to 20 carbon atoms; each R¹¹ is independently a hydrogen atom, an alkyl group having 1 to 30 carbon atoms, an alkenyl group having 2 to 30 carbon atoms, a cycloalkyl group having 3 to 30 carbon atoms, an aralkyl group having 7 to 20 carbon atoms, an aryl group having 6 to 30 carbon atoms, or a heteroaryl group having 2 to 30 carbon atoms; and R¹³ is an m-valent hydrocarbon group optionally having an alkoxy group, wherein the alkylene group, the alkenylene group, the alkoxylene group, the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms.

When the polycarbonate resin composition of the present embodiment contains the sulfur compound, the content of the sulfur compound is preferably 500 ppm by mass to 10000 ppm by mass, more preferably 500 ppm by mass to 5000 ppm by mass, further preferably 1000 ppm by mass to 5000 ppm by mass, based on the total mass of the polycarbonate resin composition from the viewpoint of the amount of the compound added which sufficiently produces the advantageous effects of the present invention, and cost.

The polycarbonate resin composition of the present embodiment preferably contains the compound having an amide bond and the sulfur compound from the viewpoint of markedly enhancing heat stability in air and in nitrogen.

When the polycarbonate resin composition of the present embodiment contains the compound having an amide bond and the sulfur compound, the contents of the compound having an amide bond and the sulfur compound are each preferably 500 ppm by mass to 10000 ppm by mass, more preferably 500 ppm by mass to 5000 ppm by mass, further preferably 1000 ppm by mass to 5000 ppm by mass, based on the total mass of the polycarbonate resin composition from the viewpoint of the amounts of the compounds added which sufficiently produce the advantageous effects of the present invention, and cost.

### (Phosphite ester compound)

The polycarbonate resin composition of the present embodiment preferably contains a phosphite ester compound from the viewpoint of markedly enhancing heat stability in nitrogen.

The phosphite ester compound can be a compound that has phosphite ester in the molecule, and has no bulky substituent near ether in the phosphite ester compound from the viewpoint of causing sufficient interaction between carbonate and the phosphite ester. Examples of the phosphite ester compound include, but are not limited to, trimethyl phosphite, triethyl phosphite, triallyl phosphite, triisopropyl phosphite, tributyl phosphite, trihexyl phosphite, tri(2-ethylhexyl) phosphite, triisodecyl phosphite, trilauryl phosphite, tris(tridecyl) phosphite, trioleyl phosphite, tristearyl phosphite, 1,2-phenylene phosphorochloridite, 2-chloro-4H-1,3,2-benzodioxaphosphorin-4-one, tris(β-chloroethyl) phosphite, diphenylmethyl phosphite, triphenyl phosphite, ethylhexyldiphenyl phosphite, decyldiphenyl phosphite, tris(p-methylphenyl) phosphite, trimethylolpropane phosphite, tris(trimethylsilyl) phosphite, 3,9-bis(octadecyloxy)-2,4,8,10-tetraoxa-3,9-diphosphaspiro[5.5]undecane, trisnonylphenyl phosphite, tetraalkyl(C12-15)-4,4'-isopropylidene diphenyl diphosphite, diphenylisodecyl phosphite, tetraphenyl dipropylene glycol diphosphite, bis(tridecyl)pentaerythritol diphosphite, bis(tridecyl)pentaerythritol diphosphite, distearylpentaerythritol diphosphite, and 2-tert-butyl-6-methyl-4-{3-[(2,4,8,10-tetra-tert-butyldibenzo[d,f][1,3,2]dioxaphosphepin-6-yl)oxy]propyl}phenol.

For example, a compound having a structure represented by the formula (2-2) given below, or a compound having a structure represented by the formula (3-2) given below is preferred, and trisnonylphenyl phosphite or tetraalkyl(C12-15)-4,4'-isopropylidene diphenyl diphosphite is more preferred, particularly, from the viewpoint of markedly enhancing heat stability in nitrogen.

One type of these compounds may be used singly, or two or more thereof may be used in combination.

The enhancement of heat stability in nitrogen improves, for example, heat stability in a solvent devolatilization process in resin production and a molding process, and product heat stability in a deoxidized atmosphere such as vacuum. 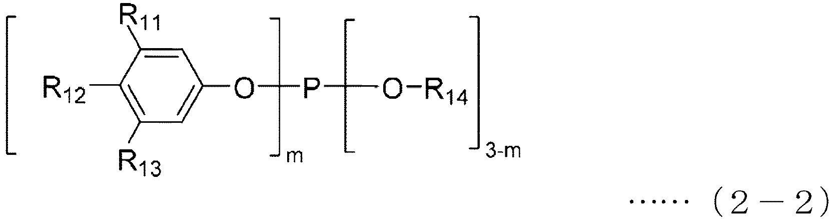 wherein m represents an integer of 0 to 3; and R¹¹ to R¹⁴ are each independently a hydrogen atom, an alkyl group having 1 to 20 carbon atoms, an alkenyl group having 2 to 20 carbon atoms, an alkoxy group having 1 to 20 carbon atoms, a cycloalkyl group having 3 to 20 carbon atoms, an aralkyl group having 7 to 20 carbon atoms, an aryl group having 6 to 20 carbon atoms, or a heteroaryl group having 2 to 20 carbon atoms, wherein the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms. 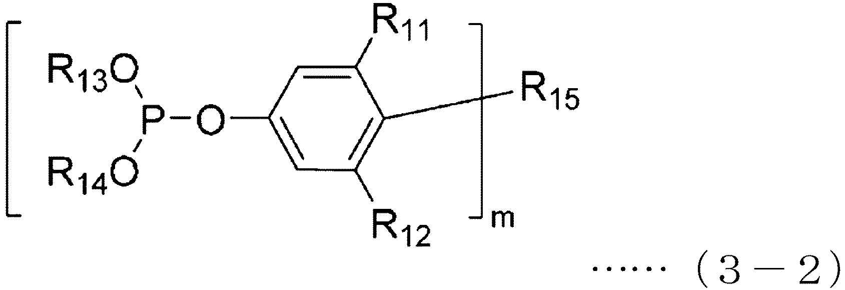 wherein m represents an integer of 1 to 4; R¹¹ and R¹² are each independently a hydrogen atom, an alkyl group having 1 to 20 carbon atoms, an alkenyl group having 2 to 20 carbon atoms, an alkoxy group having 1 to 20 carbon atoms, a cycloalkyl group having 3 to 20 carbon atoms, an aralkyl group having 7 to 20 carbon atoms, an aryl group having 6 to 20 carbon atoms, or a heteroaryl group having 2 to 20 carbon atoms; R¹³ and R¹⁴ are each independently a hydrogen atom, an alkyl group having 1 to 30 carbon atoms, an alkenyl group having 2 to 30 carbon atoms, a cycloalkyl group having 3 to 30 carbon atoms, an aralkyl group having 7 to 20 carbon atoms, an aryl group having 6 to 30 carbon atoms, or a heteroaryl group having 2 to 30 carbon atoms; and R¹⁵ is an m-valent hydrocarbon group, wherein the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms.

When the polycarbonate resin composition of the present embodiment contains the phosphite ester compound, the content of the phosphite ester compound is preferably 500 ppm by mass to 10000 ppm by mass, more preferably 500 ppm by mass to 5000 ppm by mass, further preferably 1000 ppm by mass to 5000 ppm by mass, based on the total mass of the polycarbonate resin composition from the viewpoint of the amount of the compound added which sufficiently produces the advantageous effects of the present invention, and cost.

The polycarbonate resin composition of the present embodiment preferably contains the compound having an amide bond and the phosphite ester compound from the viewpoint of markedly enhancing heat stability in nitrogen.

When the polycarbonate resin composition of the present embodiment contains the compound having an amide bond and the phosphite ester compound, the contents of the compound having an amide bond and the phosphite ester compound are each preferably 500 ppm by mass to 10000 ppm by mass, more preferably 500 ppm by mass to 5000 ppm by mass, further preferably 1000 ppm by mass to 5000 ppm by mass, based on the total mass of the polycarbonate resin composition from the viewpoint of the amounts of the compounds added which sufficiently produce the advantageous effects of the present invention, and cost.

The polycarbonate resin composition of the present embodiment may be supplemented with other additives such as a neutralizer, an ultraviolet absorber, a mold release agent, a colorant, an antistatic agent, a lubricant, a sliding agent, a plasticizer, a compatibilizer, a flame retardant a bluing agent, and a fluidity modifier.

### (Method for producing polycarbonate resin composition)

In the present embodiment, the one or two or more compounds selected from the group consisting of a compound having an amide bond, a sulfur compound, and a phosphite ester compound to be blended into the polycarbonate resin (hereinafter, also simply referred to as a "compound to be added"), the timing of mixing, and the mixing method are not particularly limited. The timing of mixing is, for example, preferably after addition of a polymerization terminator or after precipitation purification from the viewpoint of pyrolysis prevention.

### (Blending method)

In the present embodiment, examples of the method for blending the compound to be added into the polycarbonate resin include, but are not particularly limited to, a kneading method using a kneader, a tumbler mixer, a V-type mixer, a NAUTA mixer, a Banbury mixer, a roll, or an extruder, and a solution blend method of performing mixing in a state dissolved in a common good solvent such as acetone. Any method may be used as long as the method is a blend method usually used.

### Examples

The present invention will be described further specifically with reference to Examples and Comparative Examples. However, the present invention is not limited by these Examples, etc. by any means.

In the present specification, the heat stability of a polycarbonate resin and a polycarbonate resin composition was measured as follows.

### (Measurement of molecular weight)

A solution of 2.0 g of tetrahydrofuran added to 0.02 g of the polycarbonate resin was used as a measurement sample. The weight-average molecular weight of the polycarbonate resin was measured using a HPLC apparatus (manufactured by Tosoh Corp., product name "HLC-8420GPC"). The column used was TSK guard column SuperH-H, TSKgel SuperHM-H, TSKgel SuperHM-H, TSKgel SuperH2000, and TSKgel SuperH1000 manufactured by Tosoh Corp. (all are product names manufactured by Tosoh Corp.) connected in series. The column temperature was set to 40°C, and the sample was analyzed at a rate of 0.60 mL/min with tetrahydrofuran as a mobile phase. The detector used was a RI detector. A calibration curve was prepared using polystyrene standard samples manufactured by PSS Polymer Standards Service GmbH (molecular weight: 2520000, 1240000, 552000, 277000, 130000, 66000, 34800, 19700, 8680, 3470, 1306, and 370) as standard samples. The number-average molecular weight and the weight-average molecular weight of the polycarbonate resin were determined on the basis of the calibration curve thus prepared.

### (Measurement of glass transition temperature Tg)

The glass transition temperature Tg of the polycarbonate resin was measured under conditions involving a nitrogen gas flow rate of 20 mL/min using a differential scanning calorimeter manufactured by PerkinElmer Co., Ltd. (product name "DSC8500"). More specifically, the sample was kept at 40°C for 3 minutes and then heated from 40°C to 200°C at 20°C/min to completely melt the sample. Then, the sample was cooled from 200°C to 40°C at 50°C/min and kept at 40°C for 5 minutes. Subsequently, the point of intersection between a curve at a step-like change portion and a straight line equidistant in the ordinate direction from the respective extended lines of tangents (intermediate-point glass transition temperature) in a DSC curve drawn in secondary heating from 40°C to 190°C at 10°C/min was regarded as the glass transition temperature (Tg).

### (Measurement of heat stability)

The polycarbonate resin or the polycarbonate resin composition was heated at a rate of 10°C/min in a nitrogen current and in an air current using a TG-DTA apparatus manufactured by Shimadzu Corp. (product name: DTG-60A) and an aluminum krypton cell. The pyrolysis (TGA) of the polycarbonate resin or the polycarbonate resin composition was measured, and a pyrolysis start temperature was obtained from the point of intersection between tangents in a TGA curve. Based on the pyrolysis start temperature of a test specimen of the polycarbonate resin of Comparative Example 1, the effect of improving heat stability was determined as being present (indicated by "○" in Table 1) when the pyrolysis start temperature was higher, and as being absent (indicated by "×" in Table 1) when the pyrolysis start temperature was lower.

The abbreviations of compounds used in Examples and Comparative Examples given below are as follows.
(A) Polycarbonate resin
   A-1: polycarbonate resin that is constituted by 100 mol% of a structural unit derived from poly(1,2-cyclohexene carbonate), and has a weight-average molecular weight of 211,000 and glass transition temperature Tg of 120°C
(B) Compound having amide bond
   B-1: 2',3'-bis[3-(3,5-di-tert-butyl-4-hydroxyphenyl)propionyl]hydrazine
   B-2: N-(2H-1,2,4-triazol-5-yl)salicylamide
   B-3: bis[N2-(2-hydroxybenzoyl)hydrazide] dodecanedioate
(C) Antioxidant
   C-1: hindered phenol compound (Irganox 1010 manufactured by BASF SE)
   C-2: hindered phenol compound (Irganox 1076 manufactured by BASF SE)
   C-3: hindered phenol compound (SUMILIZER GA-80 manufactured by Sumitomo Chemical Co., Ltd.)
   C-4: phosphite ester compound (Irgafos 168 manufactured by BASF SE)
   C-5: phosphite ester compound (ADEKASTAB PEP-36 manufactured by ADEKA Corp.)
(D) Light stabilizer
   D-1: hindered amine compound (ADEKASTAB LA-81 manufactured by ADEKA Corp.)

### [Example 1]

1.0 g of the polycarbonate resin (A-1) and 2.0 g of an acetone solution containing 1000 ppm of the compound (B-1) having an amide bond were mixed using a magnetic stirrer so as to have the composition shown in Table 1, and dried in vacuum at 100°C for 2 hours to obtain a polycarbonate resin composition. The obtained polycarbonate resin composition was pressure-molded at 20 MPaG in a hydraulic press to obtain a plate-like test specimen of the polycarbonate resin composition. Results of measuring heat stability evaluated using the obtained test specimen are shown in Table 1.

### [Examples 2 and 3]

Each polycarbonate resin composition was obtained in the same manner as in Example 1 except that the blending of the additive (compound having an amide bond) was changed as shown in Table 1. The obtained polycarbonate resin composition was molded into a test specimen in the same manner as in Example 1 and then evaluated. The results are shown in Table 1.

### [Comparative Example 1]

2.0 g of acetone was added to 1.0 g of the polycarbonate resin (A-1), which was dissolved using a magnetic stirrer, dried in vacuum at 100°C for 2 hours, and pressure-molded at 20 MPaG in a hydraulic press to obtain a plate-like test specimen of the polycarbonate resin. The obtained polycarbonate resin was molded into a test specimen in the same manner as in Example 1 and then evaluated. The results are shown in Table 1.

### [Comparative Examples 2 to 7]

Each polycarbonate resin composition was obtained in the same manner as in Example 1 except that the blending of the additive (antioxidant or light stabilizer) was changed as shown in Table 1. The obtained polycarbonate resin composition was molded into a test specimen in the same manner as in Example 1 and then evaluated. The results are shown in Table 1.

**[Table 1]**

| | | Ex. 1 | Ex. 2 | Ex. 3 | Comp. Ex. 1 | Comp. Ex. 2 | Comp. Ex. 3 | Comp. Ex. 4 | Comp. Ex. 5 | Comp. Ex. 6 | Comp. Ex. 7 |
|---|---|---|---|---|---|---|---|---|---|---|---|
| Polycarbonate resin (A-1) (% by mass) | | 99.8 | 99.9 | 99.8 | 100 | 100.0 | 99.8 | 99.8 | 99.8 | 99.8 | 99.8 |
| Type of additive | | B-1 | B-2 | B-3 | - | C-1 | C-2 | C-3 | C-4 | C-5 | 0-1 |
| Amount added (% by mass) | | 0.2 | 0.07 | 0.17 | - | 0.2 | 0.17 | 0.2 | 0.2 | 0.2 | 0.2 |
| Pyrolysis start temperature (°C) | In nitrogen current | 281 | 279 | 277 | 267 | 266 | 265 | 268 | 259 | 266 | 259 |
| | In air current | 284 | 294 | 294 | 287 | 267 | 268 | 267 | 285 | 268 | 285 |
| Effect of improving heat stability | In nitrogen current | ○ | ○ | ○ | - | × | × | × | × | × | × |
| | In air current | × | ○ | ○ | - | × | × | × | × | × | × |

From Table 1, the polycarbonate resin compositions of Examples 1 to 3 were found to have a higher pyrolysis start temperature and better heat stability than those of the polycarbonate resin and the polycarbonate resin compositions of Comparative Examples 1 to 7.

Hereinafter, the present embodiment will be described with reference to other specific Examples and Comparative Examples. However, the present embodiment is not limited by the following Examples, etc. by any means.

The physical properties and characteristics of a polycarbonate resin and a polycarbonate resin composition were measured as follows.

### [Physical properties and characteristics]

### (Measurement of molecular weight of polycarbonate resin)

A solution of 2.0 g of tetrahydrofuran added to 0.02 g of the polycarbonate resin was used as a measurement sample. The weight-average molecular weight of the polycarbonate resin was measured using a HPLC apparatus (manufactured by Tosoh Corp., product name "HLC-8420GPC").

The column used was TSK guard column SuperH-H, TSKgel SuperHM-H, TSKgel SuperHM-H, TSKgel SuperH2000, and TSKgel SuperH1000 manufactured by Tosoh Corp. (all are product names manufactured by Tosoh Corp.) connected in series.

The column temperature was set to 40°C, and the sample was analyzed at a rate of 0.60 mL/min with tetrahydrofuran as a mobile phase.

The detector used was a RI detector.

A calibration curve was prepared using polystyrene standard samples manufactured by PSS Polymer Standards Service GmbH (molecular weight: 2520000, 1240000, 552000, 277000, 130000, 66000, 34800, 19700, 8680, 3470, 1306, and 370) as standard samples.

The weight-average molecular weight of the polycarbonate resin was determined on the basis of the calibration curve thus prepared.

### (Measurement of glass transition temperature Tg of polycarbonate resin)

The glass transition temperature Tg of the polycarbonate resin was measured under conditions involving a nitrogen gas flow rate of 20 mL/min using a differential scanning calorimeter manufactured by PerkinElmer Co., Ltd. (product name "DSC8500").

More specifically, the sample was kept at 40°C for 3 minutes and then heated from 40°C to 200°C at 20°C/min to completely melt the sample. Then, the sample was cooled from 200°C to 40°C at 50°C/min and kept at 40°C for 5 minutes. Subsequently, the point of intersection between a curve at a step-like change portion and a straight line equidistant in the ordinate direction from the respective extended lines of tangents (intermediate-point glass transition temperature) in a DSC curve drawn in secondary heating from 40°C to 190°C at 10°C/min was regarded as the glass transition temperature (Tg).

### (Measurement and evaluation of heat stability)

The polycarbonate resin or the polycarbonate resin composition was heated at a rate of 10°C/min in an air current using a TG-DTA apparatus manufactured by Shimadzu Corp. (product name: DTG-60A) and an aluminum krypton cell. The pyrolysis (TGA) of the polycarbonate resin or the polycarbonate resin composition was measured, and a pyrolysis start temperature was obtained from the point of intersection between tangents in a TGA curve.

Based on the pyrolysis start temperature of a test specimen of the polycarbonate resin of Comparative Example 8, the effect of improving heat stability was evaluated as being present (indicated by "○" in Table 2) when the pyrolysis start temperature was +3°C or more, and as being absent (indicated by "×" in Table 2) when the pyrolysis start temperature was less than +3°C.

### [Polycarbonate resin composition]

The abbreviations of compounds used in Examples and Comparative Examples given below are as follows.
((A) Polycarbonate resin)
   A-1: polycarbonate resin that is constituted by 100 mol% of a structural unit derived from poly(1,2-cyclohexene carbonate), and has a weight-average molecular weight of 211,000 and glass transition temperature Tg of 120°C
((B) Sulfur compound)
   B-1: ditridecyl 3,3'-thiobispropionate
   B-2: pentaerythritol tetrakis[3-(dodecylthio)propionate]
((C) Antioxidant)
   C-1: hindered phenol compound (Irganox 1010 manufactured by BASF SE)
   C-2: hindered phenol compound (Irganox 1076 manufactured by BASF SE)
   C-3: hindered phenol compound (SUMILIZER GA-80 manufactured by Sumitomo Chemical Co., Ltd.)
   C-4: phosphite ester compound (Irgafos 168 manufactured by BASF SE)
   C-5: phosphite ester compound (ADEKASTAB PEP-36 manufactured by ADEKA Corp.)
((D) Light stabilizer)
   D-1: hindered amine compound (ADEKASTAB LA-81 manufactured by ADEKA Corp.)

### [Example 4]

1.0 g of the polycarbonate resin (A-1) and 2.0 g of an acetone solution containing 1000 ppm of the sulfur compound (B-1) were mixed using a magnetic stirrer so as to have the composition shown in Table 2, and dried in vacuum at 100°C for 2 hours to obtain a polycarbonate resin composition.

The obtained polycarbonate resin composition was pressure-molded at 20 MPaG in a hydraulic press to obtain a plate-like test specimen of the polycarbonate resin composition.

Results of measuring and evaluating heat stability using the obtained test specimen are shown in Table 2.

### [Example 5]

A polycarbonate resin composition was obtained in the same manner as in Example 4 except that the blending of the additive (sulfur compound) was changed as shown in Table 2. The obtained polycarbonate resin composition was prepared into a test specimen in the same manner as in Example 4 and then measured and evaluated. The results are shown in Table 2.

### [Comparative Example 8]

2.0 g of acetone was added to 1.0 g of the polycarbonate resin (A-1), which was dissolved using a magnetic stirrer, dried in vacuum at 100°C for 2 hours, and pressure-molded at 20 MPaG in a hydraulic press to obtain a plate-like test specimen of the polycarbonate resin.

The obtained polycarbonate resin was measured and evaluated in the same manner as in Example 4. The results are shown in Table 2.

### [Comparative Examples 9 to 14]

Each polycarbonate resin composition was obtained in the same manner as in Example 4 except that the blending of the additive (antioxidant or light stabilizer) was changed as shown in Table 2. The obtained polycarbonate resin composition was prepared into a test specimen in the same manner as in Example 4 and then measured and evaluated. The results are shown in Table 2.

**[Table 2]**

| | | Ex. 4 | Ex. 5 | Comp. Ex. 8 | Comp. Ex. 9 | Comp. Ex. 10 | Comp. Ex. 11 | Comp. Ex. 12 | Comp. Ex. 13 | Comp. Ex. 14 |
|---|---|---|---|---|---|---|---|---|---|---|
| Polycarbonate resin (A-1) (wt%) | | 99.8 | 99.8 | 100 | 99.8 | 99.8 | 99.8 | 99.8 | 99.8 | 99.8 |
| Additive (wt%) | | 0.2 | 0.2 | - | 0.2 | 0.2 | 0.2 | 0.2 | 0.2 | 0.2 |
| Type of additive | | B-1 | B-2 | - | C-1 | C-2 | C-3 | C-4 | C-5 | 0-1 |
| Pyrolysis start temperature (°C) | In air current | 292 | 294 | 287 | 267 | 268 | 267 | 285 | 268 | 285 |
| Effect of improving heat stability | In air current | ○ | ○ | - | × | × | × | × | × | × |

From Table 2, the polycarbonate resin compositions of Examples 4 and 5 were found to have a higher pyrolysis start temperature and better heat stability than those of the polycarbonate resin and the polycarbonate resin compositions of Comparative Examples 8 to 14.

Hereinafter, the present embodiment will be described with reference to other specific Examples and Comparative Examples. However, the present embodiment is not limited by the following Examples, etc. by any means.

The physical properties and characteristics of a polycarbonate resin and a polycarbonate resin composition were measured as follows.

### [Physical properties and characteristics]

### (Measurement of molecular weight of polycarbonate resin)

A solution of 2.0 g of tetrahydrofuran added to 0.02 g of the polycarbonate resin was used as a measurement sample. The weight-average molecular weight of the polycarbonate resin was measured using a HPLC apparatus (manufactured by Tosoh Corp., product name "HLC-8420GPC").

The column used was TSK guard column SuperH-H, TSKgel SuperHM-H, TSKgel SuperHM-H, TSKgel SuperH2000, and TSKgel SuperH1000 manufactured by Tosoh Corp. (all are product names manufactured by Tosoh Corp.) connected in series.

The column temperature was set to 40°C, and the sample was analyzed at a rate of 0.60 mL/min with tetrahydrofuran as a mobile phase.

The detector used was a RI detector.

A calibration curve was prepared using polystyrene standard samples manufactured by PSS Polymer Standards Service GmbH (molecular weight: 2520000, 1240000, 552000, 277000, 130000, 66000, 34800, 19700, 8680, 3470, 1306, and 370) as standard samples.

The weight-average molecular weight of the polycarbonate resin was determined on the basis of the calibration curve thus prepared.

### (Measurement of glass transition temperature Tg of polycarbonate resin)

The glass transition temperature Tg of the polycarbonate resin was measured under conditions involving a nitrogen gas flow rate of 20 mL/min using a differential scanning calorimeter manufactured by PerkinElmer Co., Ltd. (product name "DSC8500").

More specifically, the sample was kept at 40°C for 3 minutes and then heated from 40°C to 200°C at 20°C/min to completely melt the sample. Then, the sample was cooled from 200°C to 40°C at 50°C/min and kept at 40°C for 5 minutes. Subsequently, the point of intersection between a curve at a step-like change portion and a straight line equidistant in the ordinate direction from the respective extended lines of tangents (intermediate-point glass transition temperature) in a DSC curve drawn in secondary heating from 40°C to 190°C at 10°C/min was regarded as the glass transition temperature (Tg).

### (Measurement and evaluation of heat stability)

The polycarbonate resin or the polycarbonate resin composition was heated at a rate of 10°C/min in a nitrogen current or in an air current using a TG-DTA apparatus manufactured by Shimadzu Corp. (product name: DTG-60A) and an aluminum krypton cell. The pyrolysis (TGA) of the polycarbonate resin or the polycarbonate resin composition was measured, and a pyrolysis start temperature was obtained from the point of intersection between tangents in a TGA curve.

### [Polycarbonate resin composition]

The abbreviations of compounds used in Examples and Comparative Examples given below are as follows.
((A) Polycarbonate resin)
   A-1: polycarbonate resin that is constituted by 100 mol% of a structural unit derived from poly(1,2-cyclohexene carbonate), and has a weight-average molecular weight of 211,000 and glass transition temperature Tg of 120°C
((B) Compound having amide bond)
   B-1: 2',3'-bis[3-(3,5-di-tert-butyl-4-hydroxyphenyl)propionyl]hydrazine
   B-2: N-(2H-1,2,4-triazol-5-yl)salicylamide
((C) Sulfur compound)
   C-1: pentaerythritol tetrakis[3-(dodecylthio)propionate]
   C-2: ditridecyl 3,3'-thiobispropionate

### [Example 6]

1.0 g of the polycarbonate resin (A-1), 2.0 g of an acetone solution containing 1000 ppm of the compound (B-1) having an amide bond, and 2.0 g of an acetone solution containing 1000 ppm of the sulfur compound (C-1) were mixed using a magnetic stirrer so as to have the composition shown in Table 3, and dried in vacuum at 100°C for 2 hours to obtain a polycarbonate resin composition.

The obtained polycarbonate resin composition was pressure-molded at 20 MPaG in a hydraulic press to obtain a plate-like test specimen of the polycarbonate resin composition.

Results of measuring heat stability evaluated using the obtained test specimen are shown in Table 3.

Based on the highest pyrolysis start temperature among the results of measuring the heat stability of test specimens of polycarbonate resin compositions of Comparative Example 15, Comparative Example 16, and Comparative Example 19, the effect of improving heat stability was determined as being present (indicated by " ○" in Table 3) when the pyrolysis start temperature was +3°C or more, and as being absent (indicated by "×" in Table 3) when the pyrolysis start temperature was less than +3°C.

### [Examples 7 and 8]

Each polycarbonate resin composition was obtained in the same manner as in Example 6 except that the blending of the additives was changed as shown in Table 4.

The obtained polycarbonate resin composition was molded into a test specimen in the same manner as in Example 6 and then evaluated. The results are shown in Table 4.

Based on the highest pyrolysis start temperature among the results of measuring the heat stability of test specimens of polycarbonate resin compositions of Comparative Example 15 and Comparative Example 17 to Comparative Example 19, the effect of improving heat stability was determined as being present (indicated by " ○" in Table 4) when the pyrolysis start temperature was +3°C or more, and as being absent (indicated by "×" in Table 4) when the pyrolysis start temperature was less than +3°C.

### [Comparative Example 15]

4.0 g of acetone was added to 1.0 g of the polycarbonate resin (A-1), which was dissolved using a magnetic stirrer, dried in vacuum at 100°C for 2 hours, and pressure-molded at 20 MPaG in a hydraulic press to obtain a plate-like test specimen of the polycarbonate resin. The obtained polycarbonate resin was molded into a test specimen in the same manner as in Example 6 and then evaluated. The results are shown in Tables 3 and 4.

### [Comparative Examples 16 to 19]

Each polycarbonate resin composition was obtained in the same manner as in Example 6 except that the blending of the additives was changed as shown in Table 3 or 4. The obtained polycarbonate resin composition was molded into a test specimen in the same manner as in Example 6 and then evaluated. The results are shown in Table 3 or 4.

**[Table 3]**

| | | Example 6 | Comparative Example 15 | Comparative Example 16 | Comparative Example 19 |
|---|---|---|---|---|---|
| Polycarbonate resin (A-1) (% by mass) | | 99.6 | 100 | 99.6 | 99.8 |
| Type of additive 1 | Type of additive | B-1 | - | B-1 | C-2 |
| | Amount added (% by mass) | 0.2 | - | 0.4 | 0.2 |
| Type of additive 2 | Type of additive | C-2 | - | - | - |
| | Amount added (% by mass) | 0.2 | - | - | - |
| Pyrolysis start temperature (°C) | In nitrogen current | 285 | 267 | 285 | 269 |
| | In air current | 299 | 287 | 286 | 292 |
| Effect of improving heat stability | In nitrogen current | × | - | - | - |
| | In air current | ○ | - | - | - |

From Table 3, the polycarbonate resin composition of Example 6 was found to have better heat stability than that of the polycarbonate resin and the polycarbonate resin compositions of Comparative Example 15, Comparative Example 16, and Comparative Example 19.

**[Table 4]**

| | | Example 7 | Example 8 | Comparative Example 15 | Comparative Example 17 | Comparative Example 18 | Comparative Example 19 |
|---|---|---|---|---|---|---|---|
| Polycarbonate resin (A-1) (% by mass) | | 99.6 | 99.6 | 100 | 99.6 | 99.8 | 99.8 |
| Type of additive 1 | Type of additive | B-2 | B-2 | - | B-2 | C-1 | C-2 |
| | Amount added (% by mass) | 0.2 | 0.2 | - | 0.4 | 0.2 | 0.2 |
| Type of additive 2 | Type of additive | C-1 | C-2 | - | - | - | - |
| | Amount added (% by mass) | 0.2 | 0.2 | - | - | - | - |
| Pyrolysis start temperature (°C) | In nitrogen current | 295 | 306 | 267 | 293 | 266 | 269 |
| | In air current | 304 | 304 | 287 | 295 | 294 | 292 |
| Effect of improving heat stability | In nitrogen current | × | ○ | - | - | - | - |
| | In air current | ○ | ○ | - | - | - | - |

From Table 4, the polycarbonate resin compositions of Examples 7 to 8 were found to have a higher pyrolysis start temperature and better heat stability than those of the polycarbonate resin and the polycarbonate resin compositions of Comparative Example 15, and Comparative Examples 17 to 19.

Hereinafter, the present embodiment will be described with reference to other specific Examples and Comparative Examples. However, the present embodiment is not limited by the following Examples, etc. by any means.

The physical properties and characteristics of a polycarbonate resin and a polycarbonate resin composition were measured as follows.

### [Physical properties and characteristics]

### (Measurement of molecular weight of polycarbonate resin)

A solution of 2.0 g of tetrahydrofuran added to 0.02 g of the polycarbonate resin was used as a measurement sample. The weight-average molecular weight of the polycarbonate resin was measured using a HPLC apparatus (manufactured by Tosoh Corp., product name "HLC-8420GPC").

The column used was TSK guard column SuperH-H, TSKgel SuperHM-H, TSKgel SuperHM-H, TSKgel SuperH2000, and TSKgel SuperH1000 manufactured by Tosoh Corp. (all are product names manufactured by Tosoh Corp.) connected in series.

The column temperature was set to 40°C, and the sample was analyzed at a rate of 0.60 mL/min with tetrahydrofuran as a mobile phase.

The detector used was a RI detector.

A calibration curve was prepared using polystyrene standard samples manufactured by PSS Polymer Standards Service GmbH (molecular weight: 2520000, 1240000, 552000, 277000, 130000, 66000, 34800, 19700, 8680, 3470, 1306, and 370) as standard samples.

The weight-average molecular weight of the polycarbonate resin was determined on the basis of the calibration curve thus prepared.

### (Measurement of glass transition temperature Tg of polycarbonate resin)

The glass transition temperature Tg of the polycarbonate resin was measured under conditions involving a nitrogen gas flow rate of 20 mL/min using a differential scanning calorimeter manufactured by PerkinElmer Co., Ltd. (product name "DSC8500").

More specifically, the sample was kept at 40°C for 3 minutes and then heated from 40°C to 200°C at 20°C/min to completely melt the sample. Then, the sample was cooled from 200°C to 40°C at 50°C/min and kept at 40°C for 5 minutes. Subsequently, the point of intersection between a curve at a step-like change portion and a straight line equidistant in the ordinate direction from the respective extended lines of tangents (intermediate-point glass transition temperature) in a DSC curve drawn in secondary heating from 40°C to 190°C at 10°C/min was regarded as the glass transition temperature (Tg).

### (Measurement and evaluation of heat stability)

The polycarbonate resin or the polycarbonate resin composition was heated at a rate of 10°C/min in a nitrogen current using a TG-DTA apparatus manufactured by Shimadzu Corp. (product name: DTG-60A) and an aluminum krypton cell. The pyrolysis (TGA) of the polycarbonate resin or the polycarbonate resin composition was measured, and a pyrolysis start temperature was obtained from the point of intersection between tangents in a TGA curve.

Based on the pyrolysis start temperature of a test specimen of the polycarbonate resin of Comparative Example 20, the effect of improving heat stability was evaluated as being present (indicated by "○" in Table 5) when the pyrolysis start temperature was +3°C or more, and as being absent (indicated by "×" in Table 5) when the pyrolysis start temperature was less than +3°C.

### [Polycarbonate resin composition]

The abbreviations of compounds used in Examples and Comparative Examples given below are as follows.
((A) Polycarbonate resin)
   A-1: polycarbonate resin that is constituted by 100 mol% of a structural unit derived from poly(1,2-cyclohexene carbonate), and has a weight-average molecular weight of 211,000 and glass transition temperature Tg of 120°C
((B) Phosphite ester compound)
   B-1: triphenyl phosphite
   B-2: tetraalkyl(C12-15)-4,4'-isopropylidene diphenyl diphosphite
   B-3: trisnonylphenyl phosphite
((C) Antioxidant)
   C-1: hindered phenol compound (Irganox 1010 manufactured by BASF SE)
   C-2: hindered phenol compound (Irganox 1076 manufactured by BASF SE)
   C-3: hindered phenol compound (SUMILIZER GA-80 manufactured by Sumitomo Chemical Co., Ltd.)
   C-4: phosphite ester compound (Irgafos 168 manufactured by BASF SE)
   C-5: phosphite ester compound (ADEKASTAB PEP-36 manufactured by ADEKA Corp.)
((D) Light stabilizer)
   D-1: hindered amine compound (ADEKASTAB LA-81 manufactured by ADEKA Corp.)

### [Example 9]

1.0 g of the polycarbonate resin (A-1) and 2.0 g of an acetone solution containing 1000 ppm of the phosphite ester compound (B-1) were mixed using a magnetic stirrer so as to have the composition shown in Table 5, and dried in vacuum at 100°C for 2 hours to obtain a polycarbonate resin composition.

The obtained polycarbonate resin composition was pressure-molded at 20 MPaG in a hydraulic press to obtain a plate-like test specimen of the polycarbonate resin composition.

Results of measuring and evaluating heat stability using the obtained test specimen are shown in Table 5.

### [Examples 10 and 11]

Each polycarbonate resin composition was obtained in the same manner as in Example 9 except that the blending of the additive (phosphite ester compound) was changed as shown in Table 5. The obtained polycarbonate resin composition was molded into a test specimen in the same manner as in Example 9 and then measured and evaluated. The results are shown in Table 5.

### [Comparative Example 20]

2.0 g of acetone was added to 1.0 g of the polycarbonate resin (A-1), which was dissolved using a magnetic stirrer, dried in vacuum at 100°C for 2 hours, and pressure-molded at 20 MPaG in a hydraulic press to obtain a plate-like test specimen of the polycarbonate resin.

The obtained polycarbonate resin was measured and evaluated in the same manner as in Example 9. The results are shown in Table 5.

### [Comparative Examples 21 to 26]

Each polycarbonate resin composition was obtained in the same manner as in Example 9 except that the blending of the additive (antioxidant or light stabilizer) was changed as shown in Table 5. The obtained polycarbonate resin composition was molded into a test specimen in the same manner as in Example 9 and then measured and evaluated. The results are shown in Table 5.

**[Table 5]**

| | | Ex. 9 | Ex. 10 | Ex. 11 | Comp. Ex. 20 | Comp. Ex. 21 | Comp. Ex. 22 | Comp. Ex. 23 | Comp. Ex. 24 | Comp. Ex. 25 | Comp. Ex. 26 |
|---|---|---|---|---|---|---|---|---|---|---|---|
| Polycarbonate resin (A-1) (wt%) | | 99.8 | 99.8 | 99.8 | 100 | 99.8 | 99.8 | 99.8 | 99.8 | 99.8 | 99.8 |
| Additive (wt%) | | 0.2 | 0.2 | 0.2 | - | 0.2 | 0.2 | 0.2 | 0.2 | 0.2 | 0.2 |
| Type of additive | | B-1 | B-2 | B-3 | - | C-1 | C-2 | C-3 | C-4 | C-5 | 0-1 |
| Pyrolysis start temperature (°C) | In nitrogen current | 273 | 271 | 273 | 267 | 266 | 265 | 268 | 264 | 266 | 259 |
| Effect of improving heat stability | In nitrogen current | ○ | ○ | ○ | - | × | × | × | × | × | × |

From Table 5, the polycarbonate resin compositions of Examples 9 to 11 were found to have a higher pyrolysis start temperature and better heat stability than those of the polycarbonate resin and the polycarbonate resin compositions of Comparative Examples 20 to 26.

Hereinafter, the present embodiment will be described with reference to other specific Examples and Comparative Examples. However, the present embodiment is not limited by the following Examples, etc. by any means.

The physical properties and characteristics of a polycarbonate resin and a polycarbonate resin composition were measured as follows.

### [Physical properties and characteristics]

### (Measurement of molecular weight of polycarbonate resin)

A solution of 2.0 g of tetrahydrofuran added to 0.02 g of the polycarbonate resin was used as a measurement sample. The weight-average molecular weight of the polycarbonate resin was measured using a HPLC apparatus (manufactured by Tosoh Corp., product name "HLC-8420GPC").

The column used was TSK guard column SuperH-H, TSKgel SuperHM-H, TSKgel SuperHM-H, TSKgel SuperH2000, and TSKgel SuperH1000 manufactured by Tosoh Corp. (all are product names manufactured by Tosoh Corp.) connected in series.

The column temperature was set to 40°C, and the sample was analyzed at a rate of 0.60 mL/min with tetrahydrofuran as a mobile phase.

The detector used was a RI detector.

A calibration curve was prepared using polystyrene standard samples manufactured by PSS Polymer Standards Service GmbH (molecular weight: 2520000, 1240000, 552000, 277000, 130000, 66000, 34800, 19700, 8680, 3470, 1306, and 370) as standard samples.

The weight-average molecular weight of the polycarbonate resin was determined on the basis of the calibration curve thus prepared.

### (Measurement of glass transition temperature Tg of polycarbonate resin)

The glass transition temperature Tg of the polycarbonate resin was measured under conditions involving a nitrogen gas flow rate of 20 mL/min using a differential scanning calorimeter manufactured by PerkinElmer Co., Ltd. (product name "DSC8500").

More specifically, the sample was kept at 40°C for 3 minutes and then heated from 40°C to 200°C at 20°C/min to completely melt the sample. Then, the sample was cooled from 200°C to 40°C at 50°C/min and kept at 40°C for 5 minutes. Subsequently, the point of intersection between a curve at a step-like change portion and a straight line equidistant in the ordinate direction from the respective extended lines of tangents (intermediate-point glass transition temperature) in a DSC curve drawn in secondary heating from 40°C to 190°C at 10°C/min was regarded as the glass transition temperature (Tg).

### (Measurement and evaluation of heat stability)

The polycarbonate resin or the polycarbonate resin composition was heated at a rate of 10°C/min in a nitrogen current using a TG-DTA apparatus manufactured by Shimadzu Corp. (product name: DTG-60A) and an aluminum krypton cell. The pyrolysis (TGA) of the polycarbonate resin or the polycarbonate resin composition was measured, and a pyrolysis start temperature was obtained from the point of intersection between tangents in a TGA curve.

Based on the highest pyrolysis start temperature among results of measuring the heat stability of test specimens of Comparative Examples 27 to 31, the effect of improving heat stability was evaluated as being present (indicated by "○" in Table 6) when the pyrolysis start temperature was +3°C or more, and as being absent (indicated by "×" in Table 6) when the pyrolysis start temperature was less than +3°C.

### [Polycarbonate resin composition]

The abbreviations of compounds used in Examples and Comparative Examples given below are as follows.
((A) Polycarbonate resin)
   A-1: polycarbonate resin that is constituted by 100 mol% of a structural unit derived from poly(1,2-cyclohexene carbonate), and has a weight-average molecular weight of 211,000 and glass transition temperature Tg of 120°C
((B) Compound having amide bond)
   B-1: 2',3'-bis[3-(3,5-di-tert-butyl-4-hydroxyphenyl)propionyl]hydrazine
((C) Phosphite ester compound)
   C-1: triphenyl phosphite
   C-2: trisnonylphenyl phosphite
   C-3: triisodecyl phosphite

### [Example 12]

1.0 g of the polycarbonate resin (A-1), 2.0 g of an acetone solution containing 1000 ppm of the compound (B-1) having an amide bond, and 2.0 g of an acetone solution containing 1000 ppm of the phosphite ester compound (C-1) were mixed using a magnetic stirrer so as to have the composition shown in Table 6, and dried in vacuum at 100°C for 2 hours to obtain a polycarbonate resin composition.

The obtained polycarbonate resin composition was pressure-molded at 20 MPaG in a hydraulic press to obtain a plate-like test specimen of the polycarbonate resin composition.

Results of measuring and evaluating heat stability using the obtained test specimen are shown in Table 6.

### [Examples 13 to 14]

Each polycarbonate resin composition was obtained in the same manner as in Example 12 except that the blending of the additives was changed as shown in Table 6. The obtained polycarbonate resin composition was molded into a test specimen in the same manner as in Example 12 and then measured and evaluated. The results are shown in Table 6.

### [Comparative Example 27]

4.0 g of acetone was added to 1.0 g of the polycarbonate resin (A-1), which was dissolved using a magnetic stirrer, dried in vacuum at 100°C for 2 hours, and pressure-molded at 20 MPaG in a hydraulic press to obtain a plate-like test specimen of the polycarbonate resin.

The obtained polycarbonate resin was measured and evaluated in the same manner as in Example 12. The results are shown in Table 6.

### [Comparative Examples 28 to 31]

Each polycarbonate resin composition was obtained in the same manner as in Example 12 except that the blending of the additives was changed as shown in Table 6. The obtained polycarbonate resin composition was molded into a test specimen in the same manner as in Example 12 and then measured and evaluated. The results are shown in Table 6.

**[Table 6]**

| | | Ex. 12 | Ex. 13 | Ex. 14 | Comp. Ex. 27 | Comp. Ex. 28 | Comp. Ex. 29 | Comp. Ex. 30 | Comp. Ex. 31 |
|---|---|---|---|---|---|---|---|---|---|
| Polycarbonate resin (A-1) (% by mass) | | 99.6 | 99.6 | 99.6 | 100 | 99.6 | 99.8 | 99.8 | 99.8 |
| Type of additive 1 | Type of additive | B-1 | B-1 | B-1 | - | B-1 | C-1 | C-2 | C-3 |
| | Amount added (% by mass) | 0.2 | 0.2 | 0.2 | - | 0.4 | 0.2 | 0.2 | 0.2 |
| Type of additive 2 | Type of additive | C-1 | C-2 | C-3 | - | - | - | - | - |
| | Amount added (% by mass) | 0.2 | 0.2 | 0.2 | - | - | - | - | - |
| Pyrolysis start temperature (°C) | In nitrogen current | 289 | 290 | 289 | 267 | 285 | 273 | 273 | 266 |
| Effect of improving heat stability | In nitrogen current | ○ | ○ | ○ | - | - | - | - | - |

From Table 6, the polycarbonate resin compositions of Examples 12 to 14 were found to have a higher pyrolysis start temperature and better heat stability than those of the polycarbonate resin and the polycarbonate resin compositions of Comparative Examples 27 to 31.

The present specification is based on Japanese Patent Application No. 2021-058235 filed on March 30, 2021, Japanese Patent Application No. 2021-144709 filed on September 6, 2021, Japanese Patent Application No. 2021-145175 filed on September 7, 2021, Japanese Patent Application No. 2021-145177 filed on September 7, 2021, Japanese Patent Application No. 2021-145178 filed on September 7, 2021, and Japanese Patent Application No. 2021-145189 filed on September 7, 2021, the contents of which are incorporated herein by reference.

### Industrial Applicability

The polycarbonate resin composition of the present invention has excellent heat stability and favorable moldability and tends to be excellent in optical characteristics such as hue and transparency, and thus has industrial applicability in fields such as various optical materials, for example, optical lens materials, optical devices, materials for optical components, and display materials.

## Claims

1. A polycarbonate resin composition comprising:
a polycarbonate resin comprising a constituent unit having an alicyclic hydrocarbon site where a carbonate group is linked to two carbon atoms that constitute a ring and are adjacent to each other; and
one or two or more compounds selected from the group consisting of a compound having an amide bond, a sulfur compound, and a phosphite ester compound, wherein
weight-average molecular weight Mw of the polycarbonate resin measured by size-exclusion chromatography using polystyrene as a standard sample is 50,000 or larger and 500,000 or smaller.

2. The polycarbonate resin composition according to claim 1, wherein the constituent unit having an alicyclic hydrocarbon site is represented by the following formula (1) : 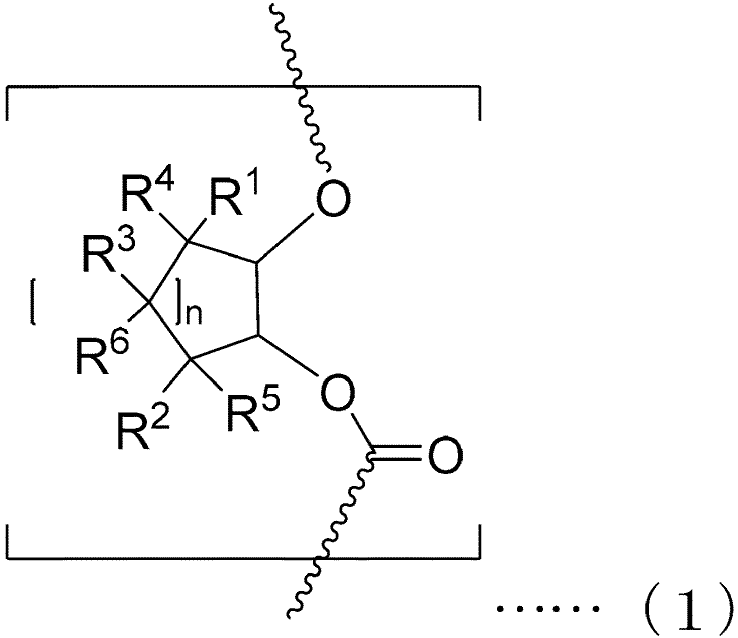 wherein n represents an integer of 1 to 6; and R¹ to R⁶ are each independently a hydrogen atom, a hydroxy group, a phosphoric acid group, an amino group, a vinyl group, an allyl group, an alkoxy group having 1 to 20 carbon atoms, an ester group having 1 to 20 carbon atoms, an acyl group having 1 to 20 carbon atoms, or a linear, branched, or cyclic alkyl group having 1 to 20 carbon atoms, and are optionally bonded to each other via an alkylene group or a carbonate group to form a cyclic structure, wherein the alkylene group is optionally substituted by a hydroxy group, a phosphoric acid group, an amino group, an alkoxy group, or an ester group, a carbonyl group is optionally inserted to the backbone, the alkoxy group, the ester group, the acyl group, and the alkyl group are each optionally substituted by a hydroxy group, a phosphoric acid group, an amino group, an alkoxy group, or an ester group, the aralkyl group, the aryl group, and the heteroaryl group are each optionally substituted by an alkyl group having 1 to 20 carbon atoms, and the aralkyl group, the aryl group, and the heteroaryl group are each optionally substituted by an alkyl group having 1 to 20 carbon atoms.

3. The polycarbonate resin composition according to claim 2, wherein in the formula (1), each of R⁴ to R⁶ is a hydrogen atom.

4. The polycarbonate resin composition according to any one of claims 1 to 3, wherein the polycarbonate resin is poly(1,2-cyclohexene carbonate).

5. The polycarbonate resin composition according to any one of claims 1 to 4, wherein glass transition temperature Tg of the polycarbonate resin measured with a differential scanning calorimeter is 80°C or higher and 180°C or lower.

6. The polycarbonate resin composition according to any one of claims 1 to 5, wherein a content of the compound having an amide bond is 500 ppm by mass to 10000 ppm by mass.

7. The polycarbonate resin composition according to any one of claims 1 to 6, wherein the compound having an amide bond comprises a structure represented by the following formula (2): 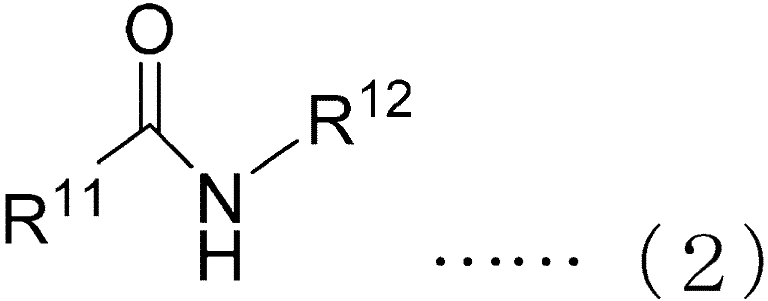 wherein R¹¹ and R¹² are each independently a hydrogen atom, an alkyl group having 1 to 20 carbon atoms, an alkenyl group having 2 to 20 carbon atoms, an alkoxy group having 1 to 20 carbon atoms, a cycloalkyl group having 3 to 20 carbon atoms, an aralkyl group having 7 to 20 carbon atoms, an aryl group having 6 to 20 carbon atoms, or a heteroaryl group having 2 to 20 carbon atoms, wherein the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms.

8. The polycarbonate resin composition according to any one of claims 1 to 6, wherein the compound having an amide bond comprises a structure represented by the following formula (3): 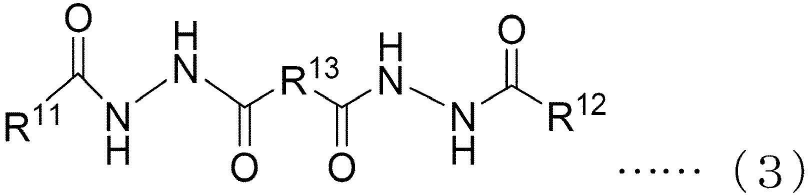 wherein R¹³ is an alkylene group having 1 to 20 carbon atoms, an alkenylene group having 2 to 20 carbon atoms, or an alkoxylene group having 1 to 20 carbon atoms; and R¹¹ and R¹² are each independently a hydrogen atom, an alkyl group having 1 to 20 carbon atoms, an alkenyl group having 2 to 20 carbon atoms, an alkoxy group having 1 to 20 carbon atoms, a cycloalkyl group having 3 to 20 carbon atoms, an aralkyl group having 7 to 20 carbon atoms, an aryl group having 6 to 20 carbon atoms, or a heteroaryl group having 2 to 20 carbon atoms, wherein the alkylene group, the alkenylene group, the alkoxylene group, the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms.

9. The polycarbonate resin composition according to any one of claims 1 to 6, wherein the compound having an amide bond comprises a structure represented by the following formula (4): 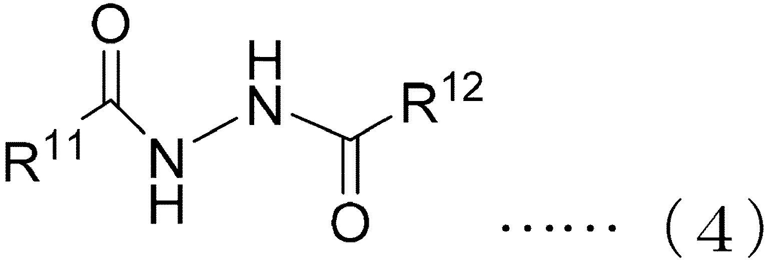 wherein R¹¹ and R¹² are each independently a hydrogen atom, an alkyl group having 1 to 20 carbon atoms, an alkenyl group having 2 to 20 carbon atoms, an alkoxy group having 1 to 20 carbon atoms, a cycloalkyl group having 3 to 20 carbon atoms, an aralkyl group having 7 to 20 carbon atoms, an aryl group having 6 to 20 carbon atoms, or a heteroaryl group having 2 to 20 carbon atoms, wherein the alkylene group, the alkenylene group, the alkoxylene group, the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, the aryl group and the heteroaryl group are each optionally substituted by an alkyl group having 1 to 6 carbon atoms, and the aralkyl group, the aryl group, and the heteroaryl group are each optionally substituted by an alkyl group having 1 to 20 carbon atoms.

10. The polycarbonate resin composition according to any one of claims 1 to 9, wherein
a content of the sulfur compound is 500 ppm by mass to 10000 ppm by mass.

11. The polycarbonate resin composition according to any one of claims 1 to 10, wherein
the sulfur compound comprises a structure represented by the following formula (2-1): 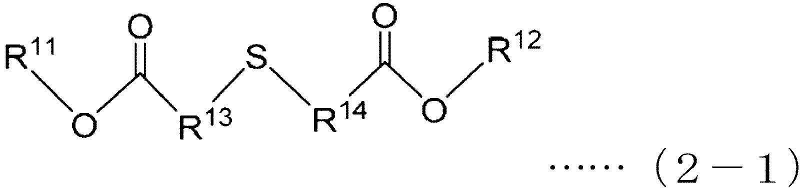 wherein R¹³ and R¹⁴ are each independently an alkylene group having 1 to 20 carbon atoms, an alkenylene group having 2 to 20 carbon atoms, or an alkoxylene group having 1 to 20 carbon atoms; and R¹¹ and R¹² are each independently a hydrogen atom, an alkyl group having 1 to 30 carbon atoms, an alkenyl group having 2 to 30 carbon atoms, a cycloalkyl group having 3 to 30 carbon atoms, an aralkyl group having 7 to 20 carbon atoms, an aryl group having 6 to 30 carbon atoms, or a heteroaryl group having 2 to 30 carbon atoms, wherein the alkylene group, the alkenylene group, the alkoxylene group, the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms.

12. The polycarbonate resin composition according to any one of claims 1 to 10, wherein
the sulfur compound comprises a structure represented by the following formula (3-1): 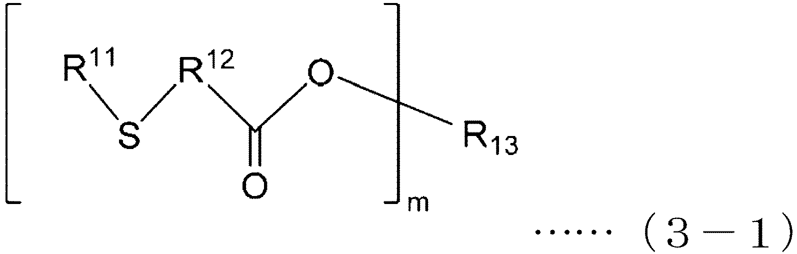 wherein m represents an integer of 1 to 4; each R¹² is independently an alkylene group having 1 to 20 carbon atoms, an alkenylene group having 2 to 20 carbon atoms, or an alkoxylene group having 1 to 20 carbon atoms; each R¹¹ is independently a hydrogen atom, an alkyl group having 1 to 30 carbon atoms, an alkenyl group having 2 to 30 carbon atoms, a cycloalkyl group having 3 to 30 carbon atoms, an aralkyl group having 7 to 20 carbon atoms, an aryl group having 6 to 30 carbon atoms, or a heteroaryl group having 2 to 30 carbon atoms; and R¹³ is an m-valent hydrocarbon group optionally having an alkoxy group, wherein the alkylene group, the alkenylene group, the alkoxylene group, the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms.

13. The polycarbonate resin composition according to any one of claims 1 to 12, wherein
the polycarbonate resin composition comprises the compound having an amide bond and the sulfur compound.

14. The polycarbonate resin composition according to any one of claims 1 to 13, wherein
contents of the compound having an amide bond and the sulfur compound are each 500 ppm by mass to 10000 ppm by mass.

15. The polycarbonate resin composition according to any one of claims 1 to 14, wherein
a content of the phosphite ester compound is 500 ppm by mass to 10000 ppm by mass.

16. The polycarbonate resin composition according to any one of claims 1 to 15, wherein
the phosphite ester compound comprises a structure represented by the following formula (2-2): 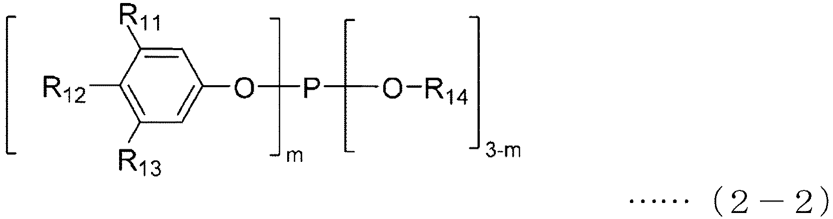 wherein m represents an integer of 0 to 3; and R¹¹ to R¹⁴ are each independently a hydrogen atom, an alkyl group having 1 to 20 carbon atoms, an alkenyl group having 2 to 20 carbon atoms, an alkoxy group having 1 to 20 carbon atoms, a cycloalkyl group having 3 to 20 carbon atoms, an aralkyl group having 7 to 20 carbon atoms, an aryl group having 6 to 20 carbon atoms, or a heteroaryl group having 2 to 20 carbon atoms, wherein the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms.

17. The polycarbonate resin composition according to any one of claims 1 to 15, wherein
the phosphite ester compound comprises a structure represented by the following formula (3-2): 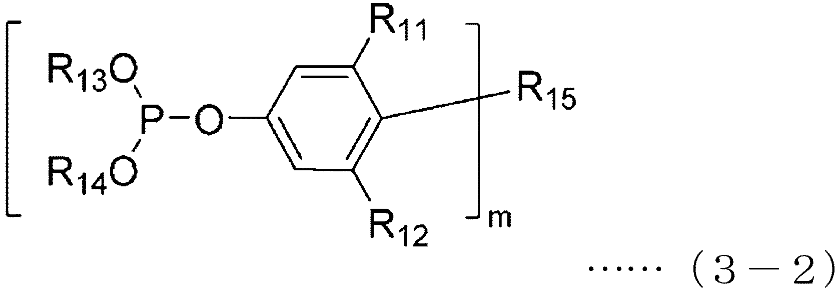 wherein m represents an integer of 1 to 4; R¹¹ and R¹² are each independently a hydrogen atom, an alkyl group having 1 to 20 carbon atoms, an alkenyl group having 2 to 20 carbon atoms, an alkoxy group having 1 to 20 carbon atoms, a cycloalkyl group having 3 to 20 carbon atoms, an aralkyl group having 7 to 20 carbon atoms, an aryl group having 6 to 20 carbon atoms, or a heteroaryl group having 2 to 20 carbon atoms; R¹³ and R¹⁴ are each independently a hydrogen atom, an alkyl group having 1 to 30 carbon atoms, an alkenyl group having 2 to 30 carbon atoms, a cycloalkyl group having 3 to 30 carbon atoms, an aralkyl group having 7 to 20 carbon atoms, an aryl group having 6 to 30 carbon atoms, or a heteroaryl group having 2 to 30 carbon atoms; and R¹⁵ is an m-valent hydrocarbon group, wherein the alkyl group, the alkenyl group, the alkoxy group, the cycloalkyl group, the aralkyl group, the aryl group, and the heteroaryl group are each optionally substituted by a hydroxy group, a phosphoric acid group, an amino group, an alkoxy group, or an ester group, and the aralkyl group, the aryl group, and the heteroaryl group are each optionally substituted by an alkyl group having 1 to 20 carbon atoms.

18. The polycarbonate resin composition according to any one of claims 1 to 17, wherein
the polycarbonate resin composition comprises the compound having an amide bond and the phosphite ester compound.

19. The polycarbonate resin composition according to any one of claims 1 to 18, wherein
contents of the compound having an amide bond and the phosphite ester compound are each 500 ppm by mass to 10000 ppm by mass.
